(19) Europäisches Patentamt
European Patent Office
Office européen des brevets

(11) **EP 4 516 404 A1**

(12) **EUROPEAN PATENT APPLICATION**
published in accordance with Art. 153(4) EPC

(43) Date of publication:
**05.03.2025 Bulletin 2025/10**

(21) Application number: **23796015.8**

(22) Date of filing: **03.04.2023**

(51) International Patent Classification (IPC):
**B02C 17/20** (2006.01)   **C04B 35/488** (2006.01)

(52) Cooperative Patent Classification (CPC):
**B02C 17/20; C04B 35/488**

(86) International application number:
**PCT/JP2023/013825**

(87) International publication number:
**WO 2023/210268 (02.11.2023 Gazette 2023/44)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **25.04.2022 JP 2022071299**

(71) Applicant: **Nikkato Corporation
Osaka 590-0001 (JP)**

(72) Inventors:
• **KOTO Noe
Sakai-shi, Osaka 590-0001 (JP)**
• **SUGIMOTO Wakana
Sakai-shi, Osaka 590-0001 (JP)**
• **OHNISHI Hiroshi
Sakai-shi, Osaka 590-0001 (JP)**

(74) Representative: **Schweitzer, Klaus
Plate Schweitzer Zounek
Patentanwälte
Rheingaustrasse 196
65203 Wiesbaden (DE)**

(54) **ZIRCONIA MEDIA, BEARING BALL, AND MANUFACTURING METHOD THEREOF**

(57)   Provided are a zirconia medium having improved wear resistance and durability, a zirconia bearing ball, and methods for producing the same. A zirconia medium which fulfills requirements: (a) comprising a $ZrO_2$-$Y_2O_3$ zirconia sintered material, wherein the $Y_2O_3$/$ZrO_2$ molar ratio is in the range of from 2.5/97.5 to 3.2/96.8; (b) the amount of the contained $Al_2O_3$ being in the range of from 0.1 to 30.0% by mass; (c) containing tetragonal crystal system zirconia in an amount of 90% by volume or more; (d) having a relative density of 95% or more; (e) having an average crystal grain diameter in the range of from 0.25 to 0.50 $\mu$m; (f) the minimum value Pmin of crushing load satisfying the relationship: Pmin (N) > 600 × $D^{2.0}$ (wherein D is an average of medium diameter); (g) the Weibull coefficient of crushing load being 10 or more; and (h) the coefficient of variation of medium diameter being less than 6%.

[FIG. 1]

EP 4 516 404 A1

**Description**

Technical Field

The present invention relates to zirconia media, a bearing ball, and methods for producing the same.

Background Art

In recent years, materials for electronic parts, such as a ceramic stacked capacitor, are being increasingly reduced in size and improved in performance. In the production of an inorganic powder used as a raw material, it is considered to be important to achieve a powder which is finely pulverized and well dispersed and which has high purity. In the pulverization step for the powder, a pulverization or dispersion treatment by means of a bead mill using media formed from a very fine inorganic sintered material is conducted. In the mill, for achieving the pulverization and dispersion treatment with high efficiency, the fine medium is stirred at a high speed. For this reason, a load applied to the medium used in the mill is large, and therefore a $Y_2O_3$ reinforced zirconia fine media having excellent impact resistance and wear resistance is used.

The fine medium is small in size, and hence needs to be charged in a large amount into a mill. When a medium having a slightly lower strength is present in the charged medium, it is likely that high-speed rotation in the mill applies a high load to the medium, causing breakage of the medium. When breakage of the medium generates a fragment, the resultant fragment can be pulverized and mixed as foreign matter into the powder to be treated. Further, the slurry temperature in the mill may be increased according to the conditions for pulverization or dispersion to cause deterioration of strength or wear resistance of the medium, leading to mixing of foreign matter into the powder to be treated.

Patent Literature 1 discloses a method for dispersing a pigment in a solution using zirconia sintered beads having an average particle diameter of 40 to 192 $\mu$m, a density of 5.9 g/cm$^3$ or more, and a sphericity of 1.07 or less.

However, when a pulverization and dispersion treatment of a powder is conducted using a bead mill, an occurrence of fracture or chipping due to the strength of the medium or stress concentration on a defect present in the medium cannot be suppressed merely by suppressing variation of the average particle diameter, density, and sphericity. Specifically, in Patent Literature 1, no reference is made to variation of strength of the beads, and variation of the strength is not suppressed by suppressing variation of the average particle diameter, density, and sphericity.

Patent Literature 2 discloses a $ZrO_2$-$Y_2O_3$ zirconia sintered material for use in media for pulverization or dispersion, wherein the $ZrO_2$-$Y_2O_3$ zirconia sintered material has the chemical composition and microstructure controlled to obtain a wear resistance. There is a disclosure that the $ZrO_2$-$Y_2O_3$ zirconia sintered material described in Patent Literature 2 exhibits excellent wear resistance in pulverization or dispersion of a hard powder.

However, Patent Literature 2 has a description of the control of the chemical composition of the $ZrO_2$-$Y_2O_3$ zirconia sintered material, but there is no description about suppression of variation of properties of the whole of the fine medium. When used as a fine medium to which a high load is applied, the fine medium which does not satisfy a predetermined strength as a whole has a disadvantage in that stress concentration on the fine medium having a slightly lower strength can cause an occurrence of fracture or chipping.

Patent Literature 3 has a description that, with respect to the spherical material after sintering, a difference can be made between the average crystal grain diameter around the center of the spherical material and that around the surface of the spherical material according to the granulation method for a molded spherical material before sintering. There is a description that when the average crystal grain diameter around the center of the spherical material is larger than that around the surface of the spherical material, marked wearing progresses on the initial stage, so that the amount of impurities mixed is drastically increased. There is a description that when the average crystal grain diameter around the center of the spherical material is smaller than that around the surface of the spherical material, internal voids are increased, and the voids serve as a starting point of fracture, so that the strength is considerably lowered. There is a disclosure that, for solving the problem, uniformity of the average crystal grain diameter around the center in the individual spherical material and that around the surface of the spherical material is controlled by controlling the specific surface area and average secondary particle diameter of the $ZrO_2$ powder used for molding of the molded spherical material before sintering to be in their respective specific ranges, and further controlling the chemical composition, e.g., the $Y_2O_3$, $Al_2O_3$, Fe, or Ti amount to be in the specific range.

However, even when uniformity of the average crystal grain diameter of the inside of the spherical material and that around the surface of the spherical material is controlled, stress concentration on the fine medium having a slightly lower strength can cause an occurrence of fracture or chipping upon pulverization or dispersion of the powder to be treated unless variation of strength of the whole of the fine medium is suppressed.

Patent Literature 4 discloses a zirconia sintered material which stably exhibits excellent wear resistance and durability for a long term when used in warm water at about 100°C, or 100°C or lower or in a high humidity atmosphere, wherein the molar ratio of $Y_2O_3$ and $ZrO_2$, the amount of $Al_2O_3$ contained, the total amount of $SiO_2$ and $TiO_2$ contained, and

the average crystal grain diameter are controlled.

However, Patent Literature 4 has a description of the control of the chemical composition of the $ZrO_2$-$Y_2O_3$ zirconia sintered material, but there is no description about suppression of variation of properties of the whole of the fine media. When used as a fine medium to which a high load is applied, the fine medium which does not satisfy a predetermined strength as a whole has a disadvantage in that, like Patent Literature 2, stress concentration on the fine medium having a slightly lower strength can cause an occurrence of fracture or cutout, leading to a lowering of the durability.

Citation List

Patent Literature

Patent Literature 1: JPH07-155577A
Patent Literature 2: JP2014-205586A
Patent Literature 3: JP2004-315246A
Patent Literature 4: JP2004-307339A

Summary of Invention

Technical Problem

A object of the present invention is to provide zirconia media which has suppressed variation of the shape of the medium and reduced variation of the mechanical properties, and has improved wear resistance and durability, a bearing ball, and methods for producing the same.

Solution to Problem

The first embodiment of the present invention is a zirconia medium which satisfies the following requirements (a) to (h):

(a) comprising a $ZrO_2$-$Y_2O_3$ zirconia sintered material, wherein the $Y_2O_3$/$ZrO_2$ molar ratio is in the range of from 2.5/97.5 to 3.2/96.8;
(b) the amount of the contained $Al_2O_3$ being in the range of from 0.1% by mass to 30.0% by mass;
(c) containing tetragonal crystal system zirconia in an amount of 90% by volume or more;
(d) having a relative density of 95% or more;
(e) having an average crystal grain diameter in the range of from 0.25 $\mu$m to 0.50 $\mu$m;
(f) the minimum value Pmin of crushing load measured at a crosshead speed of 0.5 mm/minute satisfying the relationship: Pmin (N) > $600 \times D^{2.0}$ (wherein D is an average of medium diameter);
(g) the Weibull coefficient of crushing load being 10 or more; and
(h) the coefficient of variation of medium diameter being less than 6%, wherein the coefficient of variation of medium diameter is introduced from an average and a standard deviation of medium diameter measured with respect to 200 media, wherein the medium diameter is the largest diameter of the medium seen in a SEM image obtained using a scanning electron microscope.

The second embodiment of the present invention is a zirconia bearing ball which satisfies the following requirements:

(a) comprising a $ZrO_2$-$Y_2O_3$ zirconia sintered material, wherein the $Y_2O_3$/$ZrO_2$ molar ratio is in the range of from 2.5/97.5 to 3.2/96.8;
(b) the amount of the contained $Al_2O_3$ being in the range of from 0.1% by mass to 30.0% by mass;
(c) containing tetragonal crystal system zirconia in an amount of 90% by volume or more;
(d) having a relative density of 95% or more;
(e) having an average crystal grain diameter in the range of from 0.25 $\mu$m to 0.50 $\mu$m;
(f) the minimum value Pmin of crushing load measured at a crosshead speed of 0.5 mm/minute satisfying the relationship: Pmin (N) > $600 \times D^{2.0}$ (wherein D is an average of medium diameter);
(g) the Weibull coefficient of crushing load being 10 or more;

(h) the coefficient of variation of medium diameter being less than 6%, wherein the coefficient of variation of medium diameter is introduced from an average and a standard deviation of medium diameter measured with respect to 200 media, wherein the medium diameter is the largest diameter of the medium seen in a SEM image obtained using a scanning electron microscope;

(x) having a fracture toughness of more than 5.0 MPa · m$^{1/2}$; and

(y) having a flexural strength of more than 1,100 MPa, wherein the Weibull coefficient of flexural strength is more than 7.

The third embodiment of the present invention is a method for producing a zirconia medium, the method comprising:

(p) mixing a zirconium raw material and a yttrium raw material so that the $Y_2O_3/ZrO_2$ molar ratio is in the range of from 2.5/97.5 to 3.2/96.8, and hydrolyzing the resultant mixture, and calcining the obtained hydrate of zirconium and yttrium at a temperature in the range of from 600°C to 1,200°C to obtain a synthetic powder,

(q) mixing the synthetic powder and an $Al_2O_3$ powder so that the amount of the contained $Al_2O_3$ is in the range of from 0.1% by mass to 30.0% by mass, based on the mass of the resultant mixed powder, obtaining a mixed powder,

(r) a powder, which is obtained by drying a mixed powder slurry obtained by wet pulverizing and/or dispersing the mixed powder, has a specific surface area in the range of from 5 m$^2$/g to 10 m$^2$/g, as measured by a BET method,

(s) and that the mixed powder slurry has an average particle diameter for 50% cumulative frequency in the volume-based particle size distribution in the range of from 0.3 μm to 0.6 μm, as measured by a laser diffraction method in accordance with JIS Z8825,

(t) subjecting the mixed powder slurry to drying and particle size selection so that, with respect to a slurry for measurement of aggregate powder average particle diameter obtained by mixing 1 part by mass of a powder, which is obtained by drying the mixed powder slurry, and 100 parts by mass of a solvent for molding, the aggregate powder average particle diameter for 50% cumulative frequency in the volume-based particle size distribution of the powder in an aggregate form in the slurry, as measured by a laser diffraction method in accordance with JIS Z8825, becomes in the range of from 1 μm to 5 μm, preparing the resultant powder for molding,

(u) subjecting the powder for molding to granulation molding to obtain a molded article, and

(v) sintering the molded article at a temperature in the range of from 1,250°C to 1,600°C to obtain a $ZrO_2$-$Y_2O_3$ zirconia sintered material,

wherein the zirconia medium comprises the sintered material.

The fourth embodiment of the present invention is a method for producing a zirconia bearing ball, the method comprising:

(p) mixing a zirconium raw material and a yttrium raw material so that the $Y_2O_3/ZrO_2$ molar ratio is in the range of from 2.5/97.5 to 3.2/96.8, and hydrolyzing the resultant mixture, and calcining the obtained hydrate of zirconium and yttrium at a temperature in the range of from 600°C to 1,200°C to obtain a synthetic powder,

(q) mixing the synthetic powder and an $Al_2O_3$ powder so that the amount of the contained $Al_2O_3$ is in the range of from 0.1% by mass to 30.0% by mass, based on the mass of the resultant mixed powder, obtaining a mixed powder,

(r) a powder, which is obtained by drying a mixed powder slurry obtained by wet pulverizing and/or dispersing the mixed powder, has a specific surface area in the range of from 5 m$^2$/g to 10 m$^2$/g, as measured by a BET method,

(s) and that the mixed powder slurry has an average particle diameter for 50% cumulative frequency in the volume-based particle size distribution in the range of from 0.3 μm to 0.6 μm, as measured by a laser diffraction method in accordance with JIS Z8825,

(t) subjecting the mixed powder slurry to drying and particle size selection so that, with respect to a slurry for measurement of aggregate powder average particle diameter obtained by mixing 1 part by mass of a powder, which is obtained by drying the mixed powder slurry, and 100 parts by mass of a solvent for molding, the aggregate powder average particle diameter for 50% cumulative frequency in the volume-based particle size distribution of the powder in an aggregate form in the slurry, as measured by a laser diffraction method in accordance with JIS Z8825, becomes in the range of from 1 μm to 5 μm, preparing the resultant powder for molding,

(u) subjecting the powder for molding to granulation molding to obtain a molded article, and

(v) sintering the molded article at a temperature in the range of from 1,250°C to 1,600°C to obtain a $ZrO_2$-$Y_2O_3$ zirconia sintered material,

wherein the zirconia bearing ball comprises the sintered material.

Advantageous Effects of Invention

In the present invention, there can be provided a zirconia medium having improved wear resistance and durability, a zirconia bearing ball, and methods for producing the same.

Brief Description of Drawings

Fig. 1 is a micrograph of the medium in Example 1 taken by means of a scanning electron microscope (SEM).
Fig. 2 is a micrograph of the medium in Comparative Example 7 taken by means of a scanning electron microscope (SEM).
Fig. 3A is a micrograph taken by means of a scanning electron microscope (SEM) of the medium in Comparative Example 8 before used in the pulverization and/or dispersion treatment.
Fig. 3B is a micrograph taken by means of a scanning electron microscope (SEM) of the medium in Comparative Example 8 after used in the pulverization and/or dispersion treatment.
Fig. 4 is a diagrammatic perspective view showing an example of the bearing.

Description of Embodiments

Hereinbelow, the present invention will be described with reference to the following embodiments. The embodiments described below should not be construed as limiting the scope of the present invention.
The zirconia medium of the present invention satisfies the requirements (a) to (h) described below, preferably satisfies the requirement (k) below, and may satisfy the requirement (j), (n), or (o) below.
The zirconia bearing ball of the present invention satisfies the requirements (a) to (h) below, and further satisfies the requirements (x) and (y) below, preferably satisfies the requirement (k) below, and may satisfy the requirement (j), (n), or (o) below.
The zirconia medium or zirconia bearing ball satisfies the requirements: (a) comprising a $ZrO_2$-$Y_2O_3$ zirconia sintered material, wherein the $Y_2O_3$/$ZrO_2$ molar ratio is in the range of from 2.5/97.5 to 3.2/96.8; (b) the amount of the contained $Al_2O_3$ being in the range of from 0.1% by mass to 30.0% by mass; (c) containing tetragonal crystal system zirconia in an amount of 90% by volume or more; (d) having a relative density of 95% or more; (e) having an average crystal grain diameter in the range of from 0.25 $\mu$m to 0.50 $\mu$m; (f) the minimum value Pmin of crushing load measured at a crosshead speed of 0.5 mm/minute satisfying the relationship: Pmin (N) > $600 \times D^{2.0}$ (wherein D is an average of medium diameter); (g) the Weibull coefficient of crushing load being 10 or more; and (h) the coefficient of variation of medium diameter being less than 6%, wherein the coefficient of variation of medium diameter is introduced from an average and a standard deviation of medium diameter measured with respect to 200 media, wherein the medium diameter is the largest diameter of the medium seen in a SEM image obtained using a scanning electron microscope. In the present description, in the case of the zirconia bearing ball, the "medium" can be replaced by "bearing ball".
The zirconia medium or zirconia bearing ball comprises a $ZrO_2$-$Y_2O_3$ zirconia sintered material, and the chemical composition of the sintered material, the crystal phase, the relative density, the average crystal grain diameter, the minimum value of crushing load, the Weibull coefficient of crushing load, and the coefficient of variation of medium diameter are in their respective specific ranges, and therefore variation of the shape of the medium and variation of mechanical physical properties, such as wear resistance and crushing load, of the medium can be suppressed. Even when the zirconia medium is used as a fine medium which is used in a large amount in a bead mill conducting high-speed rotation, fracture or chipping does not occur in the medium, making it possible to improve the durability and wear resistance. An occurrence of fracture or chipping in the zirconia medium is suppressed, and therefore the powder to be treated can be pulverized or dispersed while maintaining high purity of the powder to be treated. In the case of the zirconia bearing ball, an occurrence of fracture or chipping in the bearing ball is suppressed, and therefore a bearing ball which satisfies the below-mentioned specified value can be provided.
The zirconia medium or zirconia bearing ball (a) comprises a $ZrO_2$-$Y_2O_3$ zirconia sintered material, wherein the $Y_2O_3$/$ZrO_2$ molar ratio is in the range of from 2.5/97.5 to 3.2/96.8, and may be in the range of from 2.6/97.4 to 3.1/96.9. In the zirconia medium or zirconia bearing ball, the $Y_2O_3$/$ZrO_2$ molar ratio is in the above range, and therefore the amount of monoclinic crystal system zirconia is small so that the crystal structure of tetragonal crystal system zirconia has excellent stability. In the zirconia medium or zirconia bearing ball, the $Y_2O_3$/$ZrO_2$ molar ratio is in the above range, and therefore an occurrence of fracture or cutout can be suppressed, making it possible to improve the wear resistance and durability. In the zirconia medium or zirconia bearing ball, when the $Y_2O_3$/$ZrO_2$ molar ratio is less than 2.5/97.5, the amount of the contained monoclinic crystal system zirconia is increased, so that the stability of tetragonal crystal system zirconia becomes low. Further, in the zirconia medium or zirconia bearing ball, when the $Y_2O_3$/$ZrO_2$ molar ratio is less than 2.5/97.5, a stress generates a very small chipping to cause an occurrence of fracture or chipping, so that the wear resistance or durability becomes low. In the zirconia medium or zirconia bearing ball, when the $Y_2O_3/ZrO_2$ molar ratio is more than 3.2/96.8, the amount of tetragonal crystal system zirconia is reduced, so that the mechanical strength is reduced. When the mechanical strength is reduced, fracture or chipping in the medium occurs in a bead mill in which a high load is applied to the medium, so that the wear resistance becomes low. When the mechanical strength is reduced, the zirconia bearing ball is reduced in wear resistance and durability. The $ZrO_2$ raw material generally contains a small amount of $HfO_2$, and therefore the total amount of $ZrO_2$ and $HfO_2$ is used as the amount of $ZrO_2$. The $ZrO_2$ powder may contain at least one member selected from the group consisting of $TiO_2$, $FeO_2$, $MgO$, $Na_2O$, and $K_2O$. The amount of a component or components other than $ZrO_2$ contained in the $ZrO_2$ powder may be 0.3% by mass or less, based on the mass of the $ZrO_2$.

In the zirconia medium or zirconia bearing ball, (b) the amount of the contained $Al_2O_3$ is in the range of from 0.1% by mass to 30.0% by mass. In the zirconia medium or zirconia bearing ball, (b) the amount of the contained $Al_2O_3$ is in the above range, and therefore the sintering properties of $ZrO_2$ are improved. In the zirconia medium or zirconia bearing ball, (b) the amount of the contained $Al_2O_3$ is in the above range, and therefore $Al_2O_3$ undergoes segregation to the crystal grain boundary of $ZrO_2$ or is present as $Al_2O_3$ crystal grains, and thus the crystal grain boundary of $ZrO_2$ is reinforced, so that mechanical properties, such as an impact resistance, are improved. In the zirconia medium or zirconia bearing ball, when the amount of the contained $Al_2O_3$ is less than 0.1% by mass, the effects of an improvement of the sintering properties and an improvement of the mechanical properties aimed at by adding $Al_2O_3$ cannot be obtained. In the zirconia medium or zirconia bearing ball, when the amount of the contained $Al_2O_3$ is more than 30.0% by mass, such an increased amount of $Al_2O_3$ rather lowers the sintering properties and mechanical properties. In the zirconia medium or zirconia bearing ball, the amount of the contained $Al_2O_3$ is preferably in the range of from 0.2 to 25% by mass.

In the zirconia medium or zirconia bearing ball, it is preferred that (k) the amount of the contained $SiO_2$ is in the range of from 0.2% by mass to 1.0% by mass. When the $ZrO_2$-$Y_2O_3$ zirconia sintered material is used in warm water at 40°C or higher, it is likely that the crystal grain boundary suffers erosion of water, so that the wear resistance is markedly reduced. When the zirconia medium or zirconia bearing ball contains $SiO_2$ therein, the medium can maintain the wear resistance even when used in warm water at 40°C or higher. In the zirconia medium or zirconia bearing ball, the amount of the contained $SiO_2$ is in the range of from 0.2 % by mass to 1.0% by mass, and therefore erosion of water into the crystal grain boundary of $ZrO_2$ in the sintered material constituting the medium is suppressed even when the medium is used in warm water at 40°C or higher, so that the medium can maintain the wear resistance. In the zirconia medium or zirconia bearing ball, when the amount of the contained $SiO_2$ is more than 1.0% by mass, it is likely that a $SiO_2$ phase is formed in the crystal grain boundary of $ZrO_2$, so that the strength is reduced. In the zirconia medium or zirconia bearing ball, the amount of the contained $SiO_2$ may be in the range of from 0.3% by mass to 0.9% by mass, and may be in the range of from 0.4% by mass to 0.7% by mass. When the zirconia medium or zirconia bearing ball is used under conditions such that no deterioration is caused, for example, the medium is not used in warm water at 40°C or higher, the amount of the $SiO_2$ contained in the zirconia medium or zirconia bearing ball may be less than 0.2% by mass.

The zirconia medium or zirconia bearing ball (c) contains tetragonal crystal system zirconia in an amount of 90% by volume or more, preferably 95% by volume or more. The zirconia medium or zirconia bearing ball contains tetragonal crystal system zirconia in an amount of 90% by volume or more, and therefore the wear resistance, durability, and mechanical strength, such as an impact resistance, can be improved. The zirconia medium or zirconia bearing ball may contain tetragonal crystal system zirconia in an amount of 100% by volume. In the zirconia medium or zirconia bearing ball, when the amount of the contained tetragonal crystal system zirconia is less than 90% by volume, a large amount of monoclinic crystal system zirconia is contained. A very small chipping is formed around the monoclinic crystal system zirconia contained in the zirconia medium or zirconia bearing ball, so that the wear resistance, durability, and mechanical strength, such as an impact resistance, becomes low. In the zirconia medium or zirconia bearing ball, the acceptable amount of the contained monoclinic crystal system zirconia is up to 5% by volume, preferably 5% by volume or less. Further, when the zirconia medium or zirconia bearing ball contains a large amount of cubic crystal system zirconia, the effect of stress-induced phase transformation is reduced to lower the toughness, so that a very small chipping is likely to be formed in the medium when used in a bead mill in which a high load is applied to the medium. In the zirconia medium or zirconia bearing ball, the acceptable amount of the contained cubic crystal system zirconia is up to 5% by volume, preferably 5% by volume or less.

The presence and amount of the contained monoclinic crystal system zirconia (M), the amount of the contained tetragonal crystal system zirconia (T), and the presence and amount of the contained cubic crystal system zirconia (C) in the zirconia crystal phase of the sintered material can be determined by an X-ray diffraction method.

The medium is placed in a curable embedding resin so as to have an area equal to or larger than the area of a circle having a diameter of 10 mm or more, and the curable embedding resin is cured. The cured resin is ground to about one third of the diameter in the cross-section of the medium embedded into the cured embedding resin. The ground surface is subjected to lapping using 4 to 8 $\mu$m diamond abrasive grains and further using 3 $\mu$m or less diamond abrasive grains at a depth of 5 $\mu$m or more, and finally subjected to mirror polishing by polishing using 1 $\mu$m or less diamond abrasive grains so that a surface roughness Rz, as measured in accordance with JIS B0601:2001, becomes less than 0.050 $\mu$m (surface

roughness Rz < 0.05 μm), and measurement is made by an X-ray diffraction method at a diffraction angle in the range of from 27 to 34 degrees. From the results obtained by the measurement, the monoclinic crystal system zirconia (M) amount (% by volume) can be determined from the formula (1) below. In the present description, with respect to the curable embedding resin, for example, a polyester resin, an acrylic resin, or an epoxy resin can be used.

$$\text{Monoclinic crystal system zirconia (M) amount (\% by volume)} = \{[I_M(111)+I_M(1\overline{1}1)]/[I_M(111)+(1\overline{1}1)+I_{T+C}(111)]\} \times 100 \quad (1)$$

wherein $I_M(111)$ represents a peak height of monoclinic crystal system zirconia diffraction peak (111),
$I_M(1\overline{1}1)$ represents a peak height of monoclinic crystal system zirconia diffraction peak (111), and
$I_{T+C}(111)$ represents a tetragonal and cubic crystal system zirconia diffraction peak height.

The presence and amount (% by volume) of the cubic crystal system zirconia (C) can be determined in the same manner as in the monoclinic crystal system zirconia (M) amount by measurement by X-ray diffraction at a diffraction angle in the range of from 70 degree to 77 degree and calculation from the obtained results using the formula (2) below.
Further, from the above results, the tetragonal crystal system zirconia (T) amount can be determined from the following formula (3).

$$\text{Cubic crystal system zirconia (C) amount (\% by volume)} = [I_{T+C}(111)/[I_M(111)+I_M(1\overline{1}1)+I_{T+C}(111)]\} \times \{I_C(400)/[\,I_C(400)+I_T(400)+I_T(004)\,]\} \times 100 \quad (2)$$

$$\text{Tetragonal crystal system zirconia (T) amount} = 100 - \text{Cubic crystal system zirconia (C) amount (\% by volume)} - \text{Monoclinic crystal system zirconia (M) amount (\% by volume)} \quad (3)$$

wherein $I_M(111)$ represents a peak height of monoclinic crystal system zirconia diffraction peak (111),
$I_M(1\overline{1}1)$ represents a peak height of monoclinic crystal system zirconia diffraction peak (111),
$I_{T+C}(111)$ represents a peak height of tetragonal and cubic crystal system zirconia diffraction peak (111),
$I_C(400)$ represents a peak height of cubic crystal system zirconia diffraction peak (400), and
$I_T(400)$ and $I_T(004)$ represent peak heights of tetragonal crystal system zirconia diffraction peaks (400) and (004), respectively.

The zirconia medium or zirconia bearing ball has (d) a relative density of 95% or more, more preferably 97% or more. The zirconia medium or zirconia bearing ball has the (d) relative density of 95% or more, and therefore the zirconia medium or zirconia bearing ball has a high relative density. The relative density of the zirconia medium or zirconia bearing ball may be 100%, and may be 99.9% or less. In the zirconia medium or zirconia bearing ball having such high relative density, the pores contained in the sintered material are reduced, making it possible to suppress an occurrence of fracture or chipping. When the (d) relative density of the zirconia medium or zirconia bearing ball is less than 95%, the sintered material contains therein pores in a large amount. The zirconia medium containing a large amount of pores causes an occurrence of fracture or chipping in a bead mill in which a high load is applied to the medium, so that the wear resistance and durability of the medium become low. The zirconia bearing ball containing a large amount of pores has low wear resistance and durability. The relative density of the zirconia medium or zirconia bearing ball can be determined from the formula (4) below. The apparent density is measured by the gas replacement method described in JIS R1620. The theoretical density can be calculated, based on the theoretical density (6.1 g/cm³) of $ZrO_2$, into which $Y_2O_3$ is mixed as solid solution, and the theoretical density (3.98 g/m³) of $Al_2O_3$, from the compositional ratio of $ZrO_2$ and $Al_2O_3$, into which $Y_2O_3$ is mixed as solid solution, in the sintered material.

$$\text{Relative density (\%)} = \text{Apparent density/Theoretical density} \times 100 \quad (4)$$

Average crystal grain diameter

The zirconia medium or zirconia bearing ball has (e) an average crystal grain diameter in the range of from 0.25 μm to 0.50 μm. The (e) average crystal grain diameter of the zirconia medium or zirconia bearing ball may be in the range of from 0.26 μm to 0.48 μm, and may be in the range of from 0.3 μm to 0.45 μm. When the (e) average crystal grain diameter of the zirconia medium or zirconia bearing ball is less than 0.25 μm, the zirconia medium or zirconia bearing ball is reduced in toughness, and likely to suffer chipping or fracture in a mill in which a high load is applied to the medium or bearing ball, making it difficult to maintain high purity of the powder to be treated. When the (e) average crystal grain diameter of the zirconia medium or zirconia bearing ball is more than 0.5 $\mu$m, the zirconia medium or zirconia bearing ball is reduced in wear resistance and durability. The wear resistance of the zirconia medium or zirconia bearing ball varies depending on the microstructure of crystals near the surface of the sintered material constituting the zirconia medium or zirconia bearing ball. For this reason, it is preferred that the average crystal grain diameter of the zirconia medium or zirconia bearing ball is measured with respect to the portion of 10% or less of the medium diameter as viewed in the direction toward the center from the surface of the medium. The average crystal grain diameter of the zirconia medium or zirconia bearing ball can be measured as follows.

The sintered material constituting the medium is embedded into a curable embedding resin, and the curable embedding resin is cured. The cured resin is ground less than 10% of the medium diameter in the direction toward the center from the surface of the sintered material embedded into the cured embedding resin, and the ground surface is subjected to mirror polishing by the same method as the method for the surface measured for the crystal phase so that a surface roughness Rz, as measured in accordance with JIS B0601:2001, satisfies the relationship: surface roughness Rz < 0.05 $\mu$m. Then, the polished surface is subjected to thermal etching or chemical etching, and then examined by means of a scanning electron microscope (SEM) at a magnification such that 100 or more crystal grains per field of view can be observed, and an average crystal grain diameter can be determined by an intercept method. Specifically, a straight line having a length L is drawn on the plane in which crystal grains to be measured can be seen, and the number of the crystal grains which the line crosses is determined. The number of the crystal grain in which the end of the line is present is determined as 1/2. The average crystal grain diameter can be determined from the formula (5) below. It is preferred that the average crystal grain diameter is determined by a method in which two to five lines having a length L are drawn.

$$\text{Average crystal grain diameter (}\mu\text{m)} = 1.5 \times L / n \qquad (5)$$

wherein L represents a measured length ($\mu$m), and
n represents the number of crystal grains per measured length.

In the zirconia medium or zirconia bearing ball, (f) the minimum value Pmin of crushing load measured at a crosshead speed of 0.5 mm/minute satisfies the relationship: Pmin (N) > $600 \times D^{2.0}$ (wherein D is an average of medium diameter). When the minimum value Pmin of crushing load does not satisfy a value larger than a product of the square of the average D of medium diameter and 600 (Pmin (N) > $600 \times D^{2.0}$), fracture or chipping is likely to occur in a mill in which a high load is applied to the medium or bearing ball. When the minimum value Pmin of crushing load is a value equal to or smaller than a product of the square of the average D of medium diameter and 600 (Pmin (N) $\leq 600 \times D^{2.0}$), the medium having a low crushing load, i.e., a low strength, is present. When the low strength medium having a low crushing load is present, there is a high probability that an impact causes the medium having a low crushing load to suffer fracture or chipping in a mill in which a high load is applied to the medium or bearing ball. When fracture or chipping occurs in the zirconia medium, it is difficult for the zirconia medium to maintain high purity of the powder to be treated. The average D of medium diameter is determined from an average of the medium diameter of 200 media, wherein the medium diameter is the largest diameter of the medium measured from an image of one medium obtained using a scanning electron microscope.

The crushing load is determined using a testing machine by placing one medium between two diamond sintered materials or boron nitride (BN) sintered materials, and applying a load to the medium at a crosshead speed (speed of reducing the distance between the plates) of 0.5 mm/minute, and measuring a load at a time when the medium breaks. The measurement of crushing load is made with respect to 50 media, and the lowest crushing load of the measured values is determined as a minimum value Pmin (N).

In the zirconia medium or zirconia bearing ball, (g) the Weibull coefficient of crushing load is 10 or more, preferably 12 or more. With respect to the zirconia medium or zirconia bearing ball, (g) the Weibull coefficient of crushing load is 10 or more, and therefore variation of the strength is small, making it possible to improve the wear resistance and durability. In the zirconia medium or zirconia bearing ball, when the Weibull coefficient of crushing load is less than 10, variation of the strength is increased, and the medium having a low strength suffers fracture or chipping in a mill in which a high load is applied to the medium or bearing ball, so that the zirconia medium or zirconia bearing ball is reduced in wear resistance and durability. The Weibull coefficient of crushing load may be 25 or less.

In the present description, the Weibull coefficient is a Weibull coefficient determined by making Weibull plots of crushing load or flexural strength measured with respect to 50 media. The Weibull coefficient can be determined as follows. A cumulative breaking probability for the crushing load or flexural strength $\sigma$ of the rank i (i = 1 to n) is determined from the formula (6) below using a mean rank method. A Weibull coefficient of flexural strength is determined by replacing the crushing load by a flexural strength in the formula (6) below. According to the rank i of the crushing load or flexural strength,

combinations of $\sigma i$ and $F i$ are plotted on the Y axis $\ln\ln(1 - F)^{-1}$ and the X axis $\ln\sigma$. A method of least squares is applied to the data for the Weibull plots ($\ln\ln(1 - F)^{-1} - \ln\sigma$) to obtain a linear regression line, and the slope of the line is determined as a Weibull coefficient m.

$$Fi = i / (n+1) \qquad (6)$$

wherein n represents the number of tests for crushing load,
i represents the rank in ascending order, and
Fi represents the i-th cumulative breaking probability.

In the zirconia medium or zirconia bearing ball, (h) the coefficient of variation of medium diameter is preferably less than 6%, wherein the coefficient of variation of medium diameter is introduced from an average and a standard deviation of medium diameter measured with respect to 200 media, wherein the medium diameter is the largest diameter of the medium seen in a SEM image obtained using a scanning electron microscope. In the zirconia medium or zirconia bearing ball, the coefficient of variation of medium diameter is preferably 5.9% or less, and may be 5.8% or less, more preferably 4% or less. The coefficient of variation of medium diameter is preferably 0%, and may be 0.1% or more. With respect to the zirconia medium or zirconia bearing ball, (h) the coefficient of variation of medium diameter is less than 6%, and therefore variation of the size of the medium is small, and thus pulverization properties for the medium in a bead mill are even, enabling uniform pulverization and dispersion of the powder to be treated. In the zirconia medium or zirconia bearing ball, when (h) the coefficient of variation of medium diameter is 6% or more, both the medium having a large size and the medium having a small size are present, and the movement of the medium having a large size is different from that of the medium having a small size in a bead mill, and thus variation of pulverization and dispersion properties for the medium is caused, so that the particle size distribution of the powder to be treated is not uniform, leading to low reproductivity of the pulverization or dispersion treatment. Further, the medium having a small size has a small crushing load, and the small crushing load causes the medium to suffer fracture or chipping. In addition, the medium having a small size is first worn, and a difference of the sizes of the medium unevenly promotes wear of the medium, leading to disadvantages of a lowering of the wear resistance and a lowering of the durability. The coefficient of variation of medium diameter can be determined from the following formula (7).

Coefficient of variation of medium diameter (%) = Standard deviation of medium diameter/ Average of medium diameter $\times$ 100 $\qquad (7)$

The zirconia medium or zirconia bearing ball satisfies the above-mentioned requirements (a) to (h), preferably further satisfies the above requirement (k). The zirconia medium or zirconia bearing ball satisfies the above-mentioned requirements (a) to (h), preferably further satisfies at least one of the requirements (j), (k), (n), and (o) below. The zirconia medium or zirconia bearing ball satisfies the above-mentioned requirements (a) to (h) and (k), preferably further satisfies at least one of the requirements (j), (n), and (o) below.

In the zirconia medium or zirconia bearing ball, it is preferred that (j) the coefficient of variation of microindentation hardness is 5% or less, wherein the coefficient of variation of microindentation hardness is introduced from an average and a standard deviation of microindentation hardness, as measured by a method in accordance with ISO 14577, in which one medium is embedded into a curable embedding resin, and the curable embedding resin is cured, and ground to 40 to 50% of the diameter of the medium, and the ground surface is subjected to mirror polishing by the same method as the method for the surface measured for the crystal phase so that a surface roughness, as measured in accordance with JIS B0601:2001, satisfies the relationship: surface roughness Rz < 0.05 $\mu$m, and then, using an ultra-microindentation hardness tester, a microindentation hardness of the polished cross-section of the medium is measured with respect to 10 sites at regular intervals, and the microindentation hardness is measured with respect to 10 media.

In the zirconia medium or zirconia bearing ball, it is preferred that (k) the amount of the contained $SiO_2$ is in the range of from 0.2 to 1.0% by mass.

In the zirconia medium or zirconia bearing ball, it is preferred that (n) the crushing load ratio A (Pmin (N)/Pave (N)) of the minimum value Pmin (N) of crushing load to the average Pave (N) of crushing load measured at a crosshead speed of 0.5 mm/minute is 0.8 or more.

In the zirconia medium or zirconia bearing ball, it is preferred that (o) the crushing load ratio B (Pave 0.1 (N)/Pave (N)) of the average Pave 0.1 (N) of crushing load measured at a crosshead speed of 0.1 mm/minute to the average Pave (N) of crushing load measured at a crosshead speed of 0.5 mm/minute is 0.95 or more.

With respect to the zirconia medium or zirconia bearing ball, (j) the coefficient of variation of microindentation hardness can be introduced from an average and a standard deviation of microindentation hardness, as measured by a method in accordance with ISO 14577, in which one medium is embedded into a curable embedding resin, and the curable embedding resin is cured, and ground to 40% to 50% of the diameter of the medium and the resultant cross-section is subjected to mirror polishing by the above-mentioned method so that a surface roughness Rz, as measured in accordance with JIS B0601:2001, satisfies the relationship: surface roughness Rz < 0.05 $\mu$m, and then, using an ultra-microindentation hardness tester, a microindentation hardness of the polished cross-section of the medium is measured with respect to 10 sites at regular intervals, and the microindentation hardness is measured with respect to 10 media. With respect to the zirconia medium or zirconia bearing ball, (j) the coefficient of variation of microindentation hardness is preferably 5% or less. With respect to the zirconia medium or zirconia bearing ball, the coefficient of variation of microindentation hardness is more preferably 4.8% or less, and may be 4.5% or less, may be 4.0% or less, may be 3.5% or less, and is preferably 0%, but may be 0.1% or more, may be 0.2% or more, and may be 0.5% or more. When the molded article for forming the zirconia medium or zirconia bearing ball, which is obtained by granulation of the powder for molding, has an ununiform density, a difference of the shrinkage is caused in a single sintered material in the subsequent sintering step, and therefore the ununiformity of the structure of the sintered material is marked. The sintered material obtained by sintering the molded article having marked ununiformity of the structure has an ununiform ultra-microindentation hardness. The sintered material having an ununiform structure has a large residual stress, and hence is reduced in the resistance to impact, leading to an occurrence of fracture or chipping in a bead mill in which a high load is applied to the medium. With respect to the zirconia medium or zirconia bearing ball, when the coefficient of variation of microindentation hardness is 5% or less, the structure in the sintered material constituting the medium is uniform, making it possible to suppress an occurrence of fracture or chipping. With respect to the zirconia medium or zirconia bearing ball, when the coefficient of variation of microindentation hardness is more than 5%, the structure of the sintered material constituting the medium is ununiform. The zirconia medium comprising the sintered material having an ununiform structure is likely to suffer an occurrence of fracture or chipping due to collision of the one medium to another in a bead mill in which a high load is applied to the medium, so that the zirconia medium is reduced in wear resistance. The zirconia bearing ball comprising the sintered material having an ununiform structure is likely to suffer an occurrence of fracture or chipping, for example, in a bearing in which a high load is applied to the bearing ball, so that the zirconia bearing ball is reduced in wear resistance and durability. Even when the medium has a spherical shape having a sharp medium diameter distribution, variation of the microindentation hardness in the medium leads to a lowering of the impact resistance, wear resistance, and durability. The microindentation hardness of the zirconia medium or zirconia bearing ball can be measured at a test load of 50 mN, a load applying speed of 5 mN/second, a test load retention time of 1 second, and a load removing speed of 5 mN/second. The coefficient of variation of microindentation hardness, as measured using an ultra-microindentation hardness tester, of the medium can be determined from the following formula (8).

$$\text{Coefficient of variation of microindentation hardness (\%)} = \text{Standard deviation of microindentation hardness}/ \text{Average of microindentation hardness} \times 100 \tag{8}$$

The zirconia medium or zirconia bearing ball (m) preferably has a medium diameter of 0.5 mm or less. The zirconia medium or zirconia bearing ball more preferably has a medium diameter of 0.2 mm or less. The medium diameter may be 0.01 mm or more, and may be 0.015 mm or more. The method for measuring the medium diameter is the same as the method for measuring a medium diameter from an image obtained using a scanning electron microscope. When the medium diameter of the zirconia medium is 0.5 mm or less, the zirconia medium can be used as a medium for use in the pulverization or dispersion treatment for a finely divided powder. The medium used in the pulverization or dispersion treatment for a finely divided powder needs to be finely divided. In the pulverization or dispersion treatment for a finely divided powder having a size of 1 to 100 nm, called a nanopowder, a medium having a medium diameter of 0.5 mm or less is desirably used, and a fine medium having a medium diameter of 0.2 mm or less is more desirably used. When the size of the medium is extremely large, as compared to the size of the powder to be treated, the pulverization or dispersion treatment cannot pulverize or disperse the powder so as to have a very small size. Further, when the size of the medium is extremely large, as compared to the size of the powder to be treated, the mass of the medium is large, and therefore it is likely that the surface of the powder to be treated is damaged, so that the surface of the powder is activated to cause reaggregation. When the (m) medium diameter of the zirconia bearing ball is small, the zirconia bearing ball can be used in a smallsize bearing.

In the zirconia medium or zirconia bearing ball, (n) the crushing load ratio A (Pmin (N)/Pave (N)) of the minimum value Pmin (N) of crushing load to the average Pave (N) of crushing load measured at a crosshead speed of 0.5 mm/minute is preferably 0.8 or more, and may be 0.81 or more. The crushing load ratio A is 1 or less.

The crushing load varies depending on the grain boundary strength of crystals of the sintered material constituting the medium, or the size or the number of internal defects. Therefore, in the medium, with respect to not only the coefficient of variation of medium diameter, which indicates uniformity of the size distribution of the medium, but also the crushing load ratio A, when the crushing load ratio A is 0.8 or more, the medium individually has uniform strength. When the crushing load ratio A is 0.8 or more, the zirconia medium or zirconia bearing ball has such uniform strength that the impact resistance, wear resistance, and durability can be maintained.

With respect to the average of crushing load, a crushing load is measured in the same manner as in the measurement of the minimum value Pmin (N) of crushing load, and an average of crushing load measured with respect to 50 media is determined as Pave (N). The crushing load ratio A can be determined from the following formula (9).

$$\text{Crushing load ratio A}: \text{Pmin(N)} / \text{Pave(N)} \geq 0.8 \quad (9)$$

wherein Pmin (N) is the minimum value of crushing load, and
Pave (N) is the average of crushing load.

In the zirconia medium or zirconia bearing ball, (o) the crushing load ratio B (Pave 0.1 (N)/Pave (N)) of the average Pave 0.1 (N) of crushing load measured at a crosshead speed of 0.1 mm/minute to the average Pave of crushing load measured at a crosshead speed of 0.5 mm/minute is preferably 0.950 or more, more preferably 0.955 or more, further preferably 0.960 or more, still further preferably 0.965 or more. The closer the average Pave of crushing load and the average Pave 0.1 of crushing load are to each other (Pave 0.1 (N)/Pave (N) = 1), the less the amount of internal defects of the zirconia medium or zirconia bearing ball.

With respect to the crushing load, when the load speed is reduced, it is likely that a stress is concentrated on the structure having a low strength, such as ununiformity or defects in the medium, so that the crushing load is reduced. When the crushing load ratio B of the average Pave 0.1 (N) of crushing load measured at a crosshead speed of 0.1 mm/minute to the average Pave (N) of crushing load measured at a crosshead speed of 0.5 mm/minute is 0.95 or more, the inside of the medium has more uniform strength, and thus the medium has excellent impact resistance, wear resistance, and durability.

The average Pave 0.1 (N) of crushing load measured at a crosshead speed of 0.1 mm/minute is an average Pave 0.1 (N) of crushing load measured with respect to 50 media. The crushing load ratio B can be determined from the following formula (10).

$$\text{Crushing load ratio B}: \text{Pave0.1(N)} / \text{Pave(N)} \geq 0.95 \quad (10)$$

wherein Pave (N) is the average of crushing load measured at a crosshead speed of 0.5 mm/minute, and
Pave 0.1 (N) is the average of crushing load measured at a crosshead speed of 0.1 mm/minute.

The zirconia bearing ball has (x) a fracture toughness of 5.0 MPa·m$^{1/2}$ or more, preferably 5.2 MPa·m$^{1/2}$ or more, more preferably 5.4 MPa·m$^{1/2}$ or more, further preferably 5.5 MPa·m$^{1/2}$ or more, especially preferably 5.6 MPa·m$^{1/2}$ or more, and may have a fracture toughness of 8.0 MPa·m$^{1/2}$ or less, or 7.0 MPa · m$^{1/2}$ or less, or 6.5 MPa·m$^{1/2}$ or less. The zirconia bearing ball may have (x) a fracture toughness of 7.0 MPa · m$^{1/2}$ or less, or 6.8 MPa·m$^{1/2}$ or less. The zirconia bearing ball has (x) a fracture toughness of 5.0 MPa·m$^{1/2}$ or more, and therefore, for example, can satisfy the fracture toughness of the material Class III for silicon nitride (Si$_3$N$_4$) bearing ball, which is specified by F2094 of ASTM International (the former American Society for Testing and Materials), and can be used as a bearing ball which satisfies the specified value of ASTM International. Further, the zirconia bearing ball can satisfy the fracture toughness of the Grade 3 for silicon nitride (Si$_3$N$_4$) material for roller bearing ball, which is specified by JIS R1669, and can be used as a bearing ball which satisfies the specified value of JIS R1669. The fracture toughness of the zirconia bearing ball can be measured in accordance with JIS R1669.

With respect to the fracture toughness of the zirconia bearing ball, using an SENB method, the powder for molding for forming the zirconia bearing ball is subjected to press molding, and the resultant molded article for test is sintered under the same conditions as those for the medium, and cut by means of a #140 diamond wheel into a size of 3 mm × 4 mm × 45 mm (height × width × thickness), and the obtained test piece can be used. With respect to the test piece, evaluation can be conducted by three-point bending at a span of 30 mm and at a crosshead speed of 0.5 mm/minute. A notch is made in the center of the pulling surface of the test piece so that the notch end has a curvature radius of 10 $\mu$m and a depth of 1.5 mm, and the resultant test piece can be used for the measurement. A fracture toughness K$_{IC}$ can be determined from the following formulae (11) and (12).

$$K_{IC} = (P_f S / BW^{1.5})[(3/2)(a/W)^{0.5} Y(a/W)] \quad (11)$$

$$Y(a/W) = \frac{1.99 - (a/W)[1-(a/W)][2.15 - 3.93(a/W) + 2.7(a/W)^2]}{[1-2(a/W)][1-(a/W)]^{1.5}} \quad (12)$$

wherein $P_f$ is the maximum load (N) before the test piece has broken,

S is a span (m),

B is a thickness (m) of the test piece,

W is a width (m) of the test piece, and

a is a precrack length (m).

The zirconia bearing ball has (y) a flexural strength of more than 1,100 MPa, wherein the Weibull coefficient of flexural strength is more than 7, and the flexural strength may be 1,110 MPa or more, may be 1,120 MPa or more, and may be 1,150 MPa or more, and may be 1,600 MPa or less, may be 1,500 MPa or less, and may be 1,450 MPa or less. The Weibull coefficient of flexural strength may be 7.1 or more, may be 7.5 or more, and may be 8 or more, and may be 30 or less, and may be 25 or less. The zirconia bearing ball has (y) a flexural strength of more than 1,100 MPa, wherein the Weibull coefficient of flexural strength is more than 7, and therefore the zirconia bearing ball, for example, can satisfy the flexural strength of the material Class III for silicon nitride ($Si_3N_4$) bearing ball, which is specified by F2094 of ASTM International, and can satisfy the Weibull coefficient of flexural strength, and can be used as a bearing ball which satisfies the specified value of ASTM International. Further, the zirconia bearing ball can satisfy the flexural strength of the Grade 3 for silicon nitride ($Si_3N_4$) material for roller bearing ball, which is specified by JIS R1669, and the Weibull coefficient of flexural strength, and can be used as a bearing ball which satisfies the specified value of JIS R1669. The flexural strength of the zirconia bearing ball can be measured in accordance with JIS R1669 by conducting measurement of a flexural strength by three-point bending at a span of 30 mm and at a crosshead speed of 0.5 mm/minute with respect to 10 samples, and determining an arithmetic mean of the measured values of the 10 samples as (y) a flexural strength. A Weibull coefficient of flexural strength can be determined by replacing the crushing load by a flexural strength in the formula (6) above.

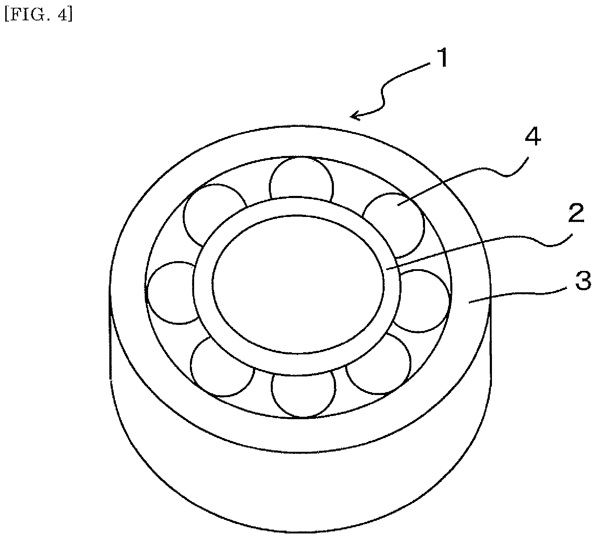

Fig. 4 is a diagrammatic perspective view showing an example of a bearing using the zirconia bearing ball. In a bearing 1, a bearing ball 4 is held between an inner ring 2 and an outer ring 3 by a not shown holder. The bearing is used in a wind turbine generator, aircraft, an automobile, a bicycle, an electric train, a refrigerator, an air conditioner, a cleaner, a copier, a washing machine, an electric massage chair, a camera, an electric screwdriver, a personal computer, an automatic ticket gate, moving walkway, an elevator, a conveyer, and medical apparatuses, such as a computed tomography apparatus (CT), a magnetic resonance imaging apparatus (MRI), and a dental handpiece. In an automobile, the bearing is used in, for example, a car wheel, a car suspension, and a steering wheel. In a bicycle, the bearing is used in, for example, a speed variator and a wheel. In an automatic ticket gate, the bearing is used in, for example, a roller part for feeding a ticket or the like. In a dental handpiece, the bearing is used in, for example, a drill conducting high-speed rotation.

Method for producing a zirconia medium or zirconia bearing ball

The method for producing a zirconia medium or zirconia bearing ball of the present invention comprises:

(p) mixing a zirconium raw material and a yttrium raw material so that the $Y_2O_3/ZrO_2$ molar ratio is in the range of from 2.5/97.5 to 3.2/96.8, and hydrolyzing the resultant mixture, and calcining the obtained hydrate of zirconium and yttrium at a temperature in the range of from 600°C to 1,200°C to obtain a synthetic powder,

(q) mixing the synthetic powder and an $Al_2O_3$ powder so that the amount of the contained $Al_2O_3$ is in the range of from 0.1% to 30.0% by mass, based on the mass of the resultant mixed powder, obtaining a mixed powder,

(r) a powder, which is obtained by drying a mixed powder slurry obtained by wet pulverizing and/or dispersing the mixed powder, has a specific surface area in the range of from 5 $m^2/g$ to 10 $m^2/g$, as measured by a BET method,

(s) and that the mixed powder slurry has an average particle diameter for 50% cumulative frequency in the volume-based particle size distribution in the range of from 0.3 pm to 0.6 $\mu$m, as measured by a laser diffraction method in accordance with JIS Z8825,

(t) subjecting the mixed powder slurry to drying and particle size selection so that, with respect to a slurry for measurement of aggregate powder average particle diameter obtained by mixing 1 part by mass of a powder, which is obtained by drying the mixed powder slurry, and 100 parts by mass of a solvent for molding, the aggregate powder average particle diameter for 50% cumulative frequency in the volume-based particle size distribution of the powder in an aggregate form in the slurry, as measured by a laser diffraction method in accordance with JIS Z8825, becomes in the range of from 1 $\mu$m to 5 $\mu$m, preparing the resultant powder for molding,

(u) subjecting the powder for molding to granulation molding to obtain a molded article, and

(v) sintering the molded article at a temperature in the range of from 1,250°C to 1,600°C to obtain a $ZrO_2$-$Y_2O_3$ zirconia sintered material.

(p) A zirconium raw material and a yttrium raw material are mixed so that the $Y_2O_3/ZrO_2$ molar ratio is in the range of from 2.5/97.5 to 3.2/96.8, and hydrolyzed, and the obtained hydrate of zirconium and yttrium is calcined at a temperature in the range of from 600°C to 1,200°C to obtain a synthetic powder. The $Y_2O_3/ZrO_2$ molar ratio of the synthetic powder is in the range of from 2.5/97.5 to 3.2/96.8, and therefore a $ZrO_2$-$Y_2O_3$ zirconia sintered material

containing monoclinic crystal system zirconia in a small amount and tetragonal crystal system zirconia in an amount of 95% by volume or more can be obtained. When the $Y_2O_3/ZrO_2$ molar ratio of the synthetic powder is in the above range, the stability of tetragonal crystal system zirconia contained in the obtained sintered material is excellent, and an occurrence of fracture or chipping in the sintered material can be suppressed, so that the obtained sintered material can be improved in wear resistance and durability.

A zirconium raw material and a yttrium raw material are mixed so that the $Y_2O_3/ZrO_2$ molar ratio is in the range of from 2.5/97.5 to 3.2/96.8, and water is added to obtain an aqueous solution, and the aqueous solution is hydrolyzed by heating under reflux at a temperature of 100°C, and then the obtained hydrate of zirconium and yttrium is dehydrated and dried, and calcined at a temperature in the range of from 600°C to 1,200°C to obtain a synthetic powder. The calcination temperature may be in the range of from 800°C to 1,000°C. The calcination temperature is in the range of from 600°C to 1,200°C, and therefore the composition in the synthetic powder is uniform, and the powder being sintered has an uniform composition, so that a sintered material having uniform strength can be obtained. The calcination time is 30 minutes to 2 hours, and may be one hour or less. The calcination is preferably conducted in an air atmosphere (oxygen: 20% by volume) under the standard pressure (0.101 MPa).

For preparing the synthetic powder, a zirconium compound is used as a zirconium raw material. With respect to the zirconium compound, zirconium oxychloride, zirconium acetate, zirconium nitrate, zirconium sulfate, or the like can be used. The zirconium compound preferably has a purity of 99.9% by mass or more. When the amount of impurities in the zirconium compound used as a zirconium raw material is large, an impurity phase is likely to be formed in the crystal grain boundary in the obtained sintered material. When a high load is applied to such a sintered material, a stress is concentrated on the impurity phase to cause the zirconia medium comprising the sintered material to suffer fracture or chipping, and therefore the impurity phase is not preferred. In the present description, with respect to the purity of the zirconium compound, reference can be made to the value shown in the catalogue for each compound.

With respect to the $Y_2O_3$ which is mixed as solid solution into $ZrO_2$, a yttrium compound is used as a yttrium raw material. With respect to the yttrium compound, yttrium nitrate, yttrium oxide, or the like can be used. The yttrium compound preferably has a purity of 99.9% by mass or more. When the amount of impurities in the yttrium compound is large, as mentioned above, an impurity phase is likely to be formed in the crystal grain boundary in the obtained sintered material, and therefore the large amount of impurities is not preferred.

(q) An $Al_2O_3$ powder and the synthetic powder are mixed so that the amount of the contained $Al_2O_3$ is in the range of from 0.1% to 30.0% by mass, based on the mass of the resultant mixed powder, obtaining a mixed powder. The mixed powder contains an $Al_2O_3$ powder, and therefore a molded article formed using a powder for molding prepared from the mixed powder is improved in the sintering properties. Further, $Al_2O_3$ undergoes segregation to the crystal grain boundary of $ZrO_2$ or is present as $Al_2O_3$ crystal grains, and therefore the crystal grain boundary of $ZrO_2$ is reinforced, so that a sintered material having improved mechanical properties, such as an impact resistance, can be obtained.

It is preferred that the $Al_2O_3$ powder has an aluminum oxide purity of 99.9% by mass or more, and that the average particle diameter for 50% cumulative frequency in the volume-based particle size distribution is in the range of from 0.1 $\mu$m to 0.3 $\mu$m, as measured by a laser diffraction method in accordance with JIS Z8825. When the amount of impurities in the $Al_2O_3$ powder is large, as mentioned above, an impurity phase is likely to be formed in the crystal grain boundary in the obtained sintered material. Further, when the average particle diameter of the $Al_2O_3$ powder is in the range of from 0.1 $\mu$m to 0.3 $\mu$m, the $Al_2O_3$ powder in an amount that satisfies the requirement (q) is uniformly dispersed in the mixed powder containing the synthetic powder and the $Al_2O_3$ powder. In the obtained sintered material, $Al_2O_3$ undergoes segregation to the crystal grain boundary of $ZrO_2$, or is present as $Al_2O_3$ crystal grains, and therefore the crystal grain boundary of $ZrO_2$ is reinforced, so that the obtained sintered material can be improved in mechanical properties, such as an impact resistance. When the average particle diameter of the $Al_2O_3$ powder is more than 0.3 $\mu$m, the size of $Al_2O_3$ crystal grains is extremely large, as compared to the size of $ZrO_2$ crystal grains, and therefore a sintered material having a uniform structure cannot be obtained. Further, when the average particle diameter of the $Al_2O_3$ powder is less than 0.1 $\mu$m, aggregation is likely to occur, making it difficult to achieve uniform dispersion.

The mixed powder (w) preferably contains a $SiO_2$ raw material so that the amount of the contained $SiO_2$ is in the range of from 0.2% to 1.0% by mass, based on the mass of the resultant mixture, and the amount of the contained $SiO_2$ may be in the range of from 0.3% to 0.9% by mass, and may be in the range of from 0.5% to 0.7% by mass. When the mixed powder (w) contains a $SiO_2$ raw material so that the amount of the contained $SiO_2$ is in the range of from 0.2% to 1.0% by mass, based on the mass of the resultant mixture, erosion of water into the crystal grain boundary of $ZrO_2$ in the sintered material constituting the medium is suppressed even in the medium which is used in warm water at 40°C or higher, so that the medium can maintain the wear resistance.

With respect to the $SiO_2$ raw material, a $SiO_2$ powder, such as fumed silica, or a silica sol, such as ethyl silicate or colloidal silica, can be used as a $SiO_2$ source.

The mixed powder is pulverized and/or dispersed so that (r) a powder for molding, which is obtained by drying a mixed powder slurry obtained by wet pulverizing and/or dispersing the mixed powder, has a specific surface area in the range of from 5 m$^2$/g to 10 m$^2$/g, as measured by a BET method, and that (s) the mixed powder slurry has an average particle diameter in the range of from 0.3 $\mu$m to 0.6 $\mu$m, as measured by a laser diffraction method. The obtained mixed powder slurry is subjected to drying and particle size selection so that the aggregate powder particle diameter becomes the value shown below, obtaining a powder for molding. By using the powder for molding in which the specific surface area and average particle diameter are in the above respective ranges, when sintering a molded article obtained by granulation molding of the powder, the inside of the molded article is uniformly sintered, so that a sintered material having uniform strength can be obtained. When the specific surface area of the mixed powder is more than 10 m$^2$/g, or the average particle diameter of the mixed powder is less than 0.3 $\mu$m, the sintering properties upon sintering a molded article obtained by granulation molding of the powder become such excessively large that the inside of the molded article is ununiformly sintered, so that the resultant sintered material has a portion having a low strength. In the sintered material having a portion having a low strength, a stress is likely to be concentrated on the weak portion to cause fracture or chipping, so that the wear resistance and durability become low. When the specific surface area of the mixed powder is less than 5 m$^2$/g, or the average particle diameter of the mixed powder is more than 0.6 $\mu$m, the sintering properties become such low that a defect is likely to remain, and the strength of the resultant sintered material is lowered to cause fracture or chipping, so that the wear resistance and durability become low.

The mixed powder may be wet pulverized and/or dispersed so that the specific surface area becomes in the range of from 5.2 m$^2$/g to 9.5 m$^2$/g, as measured by a BET method. Further, the mixed powder may be wet pulverized and/or dispersed so that the average particle diameter becomes in the range of from 0.32 $\mu$m to 0.59 $\mu$m, as measured by a laser diffraction method, and may be wet pulverized and/or dispersed so that the average particle diameter becomes in the range of from 0.35 $\mu$m to 0.50 $\mu$m.

(t) The mixed powder slurry is subjected to drying and particle size selection so that, with respect to a slurry for measurement of aggregate powder average particle diameter obtained by mixing 1 part by mass of a powder, which is obtained by drying the mixed powder slurry, and 100 parts by mass of a solvent for molding, the aggregate powder average particle diameter for 50% cumulative frequency in the volume-based particle size distribution of the powder in an aggregate form in the slurry, as measured by a laser diffraction method in accordance with JIS Z8825, becomes in the range of from 1 $\mu$m to 5 $\mu$m, preparing the resultant powder for molding. The aggregate powder average particle diameter of the powder in an aggregate form may be in the range of from 1.2 $\mu$m to 4.9 $\mu$m, and may be in the range of from 1.5 $\mu$m to 4.0 $\mu$m.

The present inventors have further found that not only the specific surface area and average particle diameter of the mixed powder but also the state of the powder in an aggregate form, which is obtained by drying the mixed powder slurry, largely affect the moldability and sintering properties.

The state of the powder in an aggregate form, which is obtained by drying the mixed powder slurry, largely affects the wettability of the powder with the solvent for molding used for granulation molding of the powder for molding. When the powder for molding is prepared by controlling the conditions for wet pulverization and dispersion and the conditions for addition of a suitable surfactant, drying, and particle size selection so that the aggregate powder average particle diameter of the powder in an aggregate form, which is obtained by drying the mixed powder slurry, is in the range of from 1 $\mu$m to 5 $\mu$m, the powder for molding exhibits excellent wettability upon granulation molding, and granulation molding of the powder can produce a molded article having uniform structure and molded article density. The obtained molded article can be uniformly sintered, so that a sintered material having a uniform density can be obtained. As a surfactant added for wet pulverizing or dispersing the mixed powder, sodium polycarboxylate, ammonium polycarboxylate, or the like can be used. The surfactant can be optionally used in an amount in the range of from 0.1% to 5% by mass, based on the mass of the mixed powder contained in the mixed powder slurry (100% by mass). The obtained molded article is uniformly sintered, making it possible to remove a shrinkage difference due to sintering.

In the present description, the "powder in an aggregate form" means a powder in such a state that the secondary particles are further in a weak aggregate form. The powder in an aggregate form maintains the aggregate state even in a slurry.

With respect to the powder in an aggregate form, 1 part by mass of the powder in an aggregate form and 100 parts by mass of a solvent for molding are mixed in a test tube, and an aggregate powder average particle diameter can be measured. Specifically, 0.1 g of the powder in an aggregate form and 10 g of a solvent for molding are placed in a test tube and mixed by vertically shaking for 3 seconds, and the resultant slurry is taken by means of a dropper and placed in a container for analysis, and the slurry in the container for analysis is irradiated with a laser to measure an aggregate powder average particle diameter of the powder in an aggregate form in the slurry. With respect to the solvent for molding, it is necessary to use the same solvent as the below-mentioned solvent for molding used for subjecting the powder for molding to granulation molding to obtain a molded article. The powder for molding can be used as long as the aggregate powder average particle diameter of the powder in an aggregate form is in the range of from 1.2 $\mu$m to 4.9 $\mu$m.

The method for producing a zirconia medium or zirconia bearing ball comprises (u) subjecting the obtained powder for molding to granulation molding to obtain a molded article. A solvent for molding is added to the powder for molding and subjected to granulation molding, obtaining a molded article. Examples of the solvents for molding used in the molding include water, an alcohol, a paraffin hydrocarbon, and a mixture thereof. As examples of water, there can be mentioned ion-exchanged water. As examples of alcohols, there can be mentioned alcohols having a linear or branched alkyl group having 1 to 4 carbon atoms. With respect to the molded article, it is preferred that the molded article is obtained by granulation molding so that the medium diameter becomes 0.5 mm or less after being sintered.

The method for producing a zirconia medium or zirconia bearing ball comprises (v) sintering the obtained molded article at a temperature in the range of from 1,250°C to 1,600°C to obtain a $ZrO_2$-$Y_2O_3$ zirconia sintered material. The sintering temperature is more preferably in the range of from 1,300°C to 1,550°C. The sintering temperature is in the range of from 1,250°C to 1,600°C, and therefore uniform sintering can be achieved, so that a sintered material having high strength can be obtained. The medium comprising the sintered material obtained by the method for producing a zirconia medium can satisfy the requirements (a) to (h). When the sintering temperature is lower than 1,250°C, sintering is unsatisfactory, and pores constituting defects remain to lower the strength, so that the resultant sintered material has a low wear resistance. When the sintering temperature is higher than 1,600°C, it is likely that the crystal grain diameter is considerably increased, and further the amount of the contained cubic crystal system zirconia is increased, and the toughness is reduced, so that the wear resistance becomes low. Sintering for the molded article is preferably conducted using a gas oven or the like in an air atmosphere (oxygen: 20% by volume) under the standard pressure (0.101 MPa).

With respect to the obtained sintered material, it is preferred that the surface of the sintered material is polished using a barrel polishing apparatus so that a surface roughness Rz (largest height of the roughness curve for surface roughness), as measured in accordance with JIS B0601:2001, becomes 0.3 $\mu$m or less (Rz $\leq$ 0.3 $\mu$m). By polishing the surface of the obtained sintered material using a barrel polishing apparatus, surface roughness is removed from the sintered material, so that the sintered material can be improved in wear resistance. The obtained sintered material can be used as the medium.

Examples

Hereinbelow, the present invention will be described in more detail with reference to the following Examples and Comparative Examples, which should not be construed as limiting the scope of the present invention.

Examples 1 to 8 and Comparative Examples 1 to 11

Zirconium oxychloride having a purity of 99.9% by mass (value shown in the catalogue) and yttrium nitrate having a purity of 99.9% by mass (value shown in the catalogue) were mixed into water so that the $Y_2O_3$/$ZrO_2$ molar ratio, in terms of a mole of the oxide, became the value shown in Table 2, obtaining an aqueous solution. Then, the aqueous solution was hydrolyzed by heating under reflux at 100°C, obtaining a deposit of a zirconium hydrate containing yttrium. The zirconium hydrate containing yttrium was dehydrated, and dried at 100°C for 24 hours to obtain a zirconium hydrate containing yttrium. After the zirconium hydrate containing yttrium had reached the calcination temperature shown in Table 1, the zirconium hydrate was subjected to calcination for one hour using a gas oven in an air atmosphere under the standard pressure, obtaining a synthetic powder (the treatment (p) above).

The obtained synthetic powder was wet dispersed in water, and an $Al_2O_3$ powder having a purity of 99.9% by mass (value shown in the catalogue) and, if necessary, fumed silica or silica sol having a purity of 99.9% by mass (value shown in the catalogue) as a $SiO_2$ source were added so that the respective amounts based on the mass of the resultant mixed powder became the amounts shown in Table 2, obtaining a mixed powder (the treatments (q) and (w) above).

The obtained mixed powder was wet pulverized and/or dispersed using water as a medium so that a specific surface area of the resultant slurry, as measured by the below-mentioned BET method, became the value shown in Table 1 and an average particle diameter of the slurry, as measured by the below-mentioned laser diffraction method, became the value shown in Table 1, obtaining a mixed powder slurry (the treatments (r) and (s) above).

The mixed powder slurry was subjected to drying and particle size selection so that, with respect to a slurry for measurement of aggregate powder average particle diameter obtained by mixing 1 part by mass of a powder, which is obtained by drying the mixed powder slurry, and 100 parts by mass of a solvent for molding, the aggregate powder average particle diameter of the powder in an aggregate form in the slurry, as measured by the below-mentioned laser diffraction method, became the value shown in Table 1, obtaining a powder for molding. The particle size selection was conducted by classification using a sieve (the treatment (t) above).

With respect to each of the powders for molding in the Examples and Comparative Examples, water as a solvent for molding was added to the powder for molding and subjected to granulation to form a molded article, obtaining molded articles in the Examples and Comparative Examples (the treatment (u) above).

With respect to each of the molded articles in the Examples and Comparative Examples, after the molded article had reached the sintering temperature shown in Table 1, the molded article was sintered for one hour using a gas oven in an air atmosphere under the standard pressure, obtaining sintered materials in the Examples and Comparative Examples. The surface of the sintered material was polished using a barrel polishing apparatus so that a surface roughness Rz (largest height of the roughness curve for surface roughness), as measured in accordance with JIS B0601:2001, became 0.3 μm or less (Rz ≤ 0.3 μm), and the polished sintered material was used as a medium for pulverization or dispersion (the treatment (v) above). The roughness curve for surface roughness was measured using a laser microscope (manufactured by Keyence Corporation).

With respect to each of the mixed powders in the Examples and Comparative Examples, a specific surface area and an average particle diameter were measured as described below. Further, with respect to the powder for molding, an aggregate powder average particle diameter was determined as described below. The results of the measurement as well as the calcination temperature and sintering temperature of each molded article were shown in Table 1.

Specific surface area of the mixed powder slurry

A specific surface area of the mixed powder slurry was measured by a BET method using a specific surface area measurement apparatus (Tristar II, manufactured by Shimadzu Corporation).

Average particle diameter of the mixed powder slurry

With respect to the average particle diameter of the mixed powder, using a particle size distribution measurement apparatus (MT3000, manufactured by MicrotracBEL Corp.), an average particle diameter of the mixed powder for 50% cumulative frequency in the volume-based particle size distribution was measured by a laser diffraction method in accordance with JIS Z8825.

Aggregate powder average particle diameter of the powder for molding

One part by mass of a powder, which was obtained by drying the mixed powder slurry, and 100 parts by mass of ion-exchanged water as a solvent for molding were mixed to obtain a slurry for measurement of aggregate powder average particle diameter, and, with respect to the powder in an aggregate form in the slurry, using a particle size distribution measurement apparatus (MT3000, manufactured by MicrotracBEL Corp.), an aggregate powder average particle diameter of the powder in an aggregate form for 50% cumulative frequency in the volume-based particle size distribution was measured by a laser diffraction method in accordance with JIS Z8825.

With respect to each of the media in the Examples and Comparative Examples, the following evaluations were conducted, and the results of the evaluations were shown in Tables 2 to 5. With respect to the conditions for evaluations which are not described below, reference can be made to the above-described conditions for evaluations.

Average of medium diameter, and coefficient of variation of medium diameter

With respect to each of the media in the Examples and Comparative Examples, an image for 200 media was taken using a scanning electron microscope (SEM) (SU3500, manufactured by Hitachi High-Technologies Corporation). With respect to the obtained image, using image analysis soft (Image-Pro Plus, manufactured by Nippon Roper K.K.), the largest diameter of the medium was determined as a medium diameter, and a particle size distribution of the medium diameter of 200 media was prepared. An average and a standard deviation of the medium diameter of 200 media were determined, and a coefficient of variation of medium diameter was determined from the formula (7) above.

Amount (% by volume) of crystal phase contained in the medium

With respect to each of the media in the Examples and Comparative Examples, the medium comprising a sintered material was placed in a curable embedding resin so as to have an area equal to or larger than the area of a circle having a diameter of 10 mm or more. The curable embedding resin (epoxy resin) was cured, and ground to about one third of the diameter in the cross-section of the medium comprising a sintered material embedded into the cured embedding resin, and subjected to mirror polishing by the above-mentioned method so that a surface roughness of the ground surface, as measured in accordance with JIS B0601:2001, satisfied the relationship: surface roughness Rz < 0.05 μm. Measurement was made by an X-ray diffraction method at a diffraction angle in the range of from 27 to 34 degrees and in the range of from 70 to 77 degrees. From the obtained results, the monoclinic crystal system zirconia (M) amount (% by volume), tetragonal crystal system zirconia (T) amount (% by volume), and cubic crystal system zirconia (C) amount (% by volume) were determined from the formulae (1) to (3) above.

Conditions for X-ray diffraction were used as follows: X-ray source: CuKα; output: 40 kV/40 mA; incident-side divergence slit: 1/2°; incident-side soller slit: 4.1°; receiving-side divergence slit: 5.2 mm; receiving-side soller slit: OPEN; scanning speed: 0.5°/minute; and scanning axis: 2θ/θ.

Relative density

With respect to each of the media in the Examples and Comparative Examples, an apparent density was measured in accordance with the gas replacement described in JIS R1620. Further, the theoretical density of each medium was calculated from the $Y_2O_3/ZrO_2$ molar ratio and $Al_2O_3$ amount, and a relative density (%) was determined from the formula (4) above. The theoretical density was calculated, based on the theoretical density (6.1 $g/cm^3$) of $ZrO_2$, into which $Y_2O_3$ is mixed as solid solution, and the theoretical density (3.98 $g/m^3$) of $Al_2O_3$, from the compositional ratio of $ZrO_2$ and $Al_2O_3$, into which $Y_2O_3$ is mixed as solid solution, in the sintered material.

Average crystal grain diameter

With respect to each of the media in the Examples and Comparative Examples, the medium was embedded into a curable embedding resin (epoxy resin), and the curable embedding resin was cured. The cured resin was ground less than 100 $\mu$m in the direction toward the center from the surface of the medium embedded into the cured embedding resin, and the ground surface was subjected to mirror polishing by the above-mentioned method, followed by thermal etching or chemical etching. Then, the resultant surface was examined by means of a scanning electron microscope (SEM) (SU3500, manufactured by Hitachi High-Technologies Corporation) at a magnification such that 100 or more crystal grains per field of view can be observed, and an average crystal grain diameter was determined by an intercept method. Specifically, 10 straight lines having a length L were drawn on the plane in which crystal grains to be measured can be seen, and the number of the crystal grains which the lines crossed was determined, and the number of the crystal grain in which the end of the line was present was determined as 1/2, and an average crystal grain diameter was determined from the formula (5) above.

Minimum value Pmin (N) of crushing load, $600 \times D^{2.0}$

With respect to each of the media in the Examples and Comparative Examples, using a universal testing machine (5965, manufactured by Instron Corporation), and using a boron nitride (BN) sintered material as a press plate, one medium was placed between two press plates and a load was applied to the medium at a crosshead speed of 0.5 mm/minute, and a pressure at a time when the medium broken was measured and determined as a crushing load. The average of crushing load measured with respect to 50 media was taken as Pave (N), and the minimum value of crushing load measured with respect to 50 media was taken as Pmin (N). Further, from the average (D) of medium diameter, a product of 600 and $D^{2.0}$ was determined as a specified value ($600 \times D^{2.0}$).

Weibull coefficient of crushing load

With respect to each of the media in the Examples and Comparative Examples, in the same manner as in the measurement of the minimum value of crushing load, Weibull plots of crushing load measured with respect to 50 media were made, and a cumulative breaking probability for the crushing load $\sigma$ of the rank i (i = 1 to n) was determined from the formula (6) above using a mean rank method. According to the rank i of crushing load, combinations of oi and Fi were plotted on the Y axis $\ln\ln(1 - F)^{-1}$ and the X axis $\ln\sigma$. A method of least squares was applied to the data for the Weibull plots ($\ln\ln(1 - F)^{-1}$ - $\ln\sigma$) to obtain a linear regression line, and the slope of the line was determined as a Weibull coefficient.

Crushing load ratio A

With respect to each of the media in the Examples and Comparative Examples, in the same manner as in the measurement of the minimum value of crushing load, the crushing load ratio A (Pmin (N)/Pave (N)) of the minimum value Pmin (N) of crushing load to the average Pave (N) of crushing load measured at a crosshead speed of 0.5 mm/minute with respect to 50 media was determined from the formula (9) above.

Crushing load ratio B

With respect to each of the media in the Examples and Comparative Examples, in the same manner as in the measurement of the minimum value of crushing load, the crushing load ratio B (Pave 0.1 (N)/Pave (N)) of the average Pave 0.1 (N) of crushing load measured at a crosshead speed of 0.1 mm/minute to the average Pave of crushing load measured at a crosshead speed of 0.5 mm/minute with respect to 50 media was determined from the formula (10) above.

Coefficient of variation of hardness measured using an ultra-microindentation hardness tester

With respect to each of the media in the Examples and Comparative Examples, one medium was embedded into a curable embedding resin (epoxy resin), and the curable embedding resin was cured. The cured resin was ground to 40% to 50% of the diameter of the medium and the resultant cross-section was subjected to mirror polishing by the above-mentioned method so that a surface roughness Rz, as measured in accordance with JIS B0601:2001, satisfied the relationship: surface roughness Rz < 0.05 $\mu$m. Then, using an ultra-microindentation hardness tester (ENT-1100a, manufactured by Elionix Inc.), and using a Berkovich indenter, a microindentation hardness (N/mm$^2$) was measured with respect to 10 sites at regular intervals of the cross-section of the medium in the direction of the diameter of the medium at a load of 50 mN, a load applying speed of 5 mN/second, for a test load retention time of 1 second, and at a load removing speed of 5 mN/second. From an average and a standard deviation of the microindentation hardness measured with respect to 10 media, a coefficient of variation of the ultra-microindentation hardness was determined from the formula (8) above.

Flexural strength and Weibull coefficient of flexural strength

Preparation of a sample for processing

The powders for molding in the Examples and Comparative Examples were individually subjected to cold isostatic press (CIP) molding at 1,000 kgf/cm$^2$ using Sr.CIP-M, manufactured by Kobe Steel Ltd., and then sintered under the same conditions as those for the medium to prepare a sample for processing. The sample for processing was cut by means of a #140 diamond wheel into a size of height: 3 mm $\times$ width: 4 mm $\times$ thickness: 45 mm, preparing a test piece.

Flexural strength and Weibull coefficient of flexural strength

In accordance with JIS R1601, measurement of a flexural strength by three-point bending at a span of 30 mm and at a crosshead speed of 0.5 mm/minute was conducted with respect to 10 test piece samples, and an arithmetic mean of the values of the 10 samples was determined as a flexural strength. Further, using the flexural strength, with respect to each of the media in the Examples and Comparative Examples, a Weibull coefficient of flexural strength was determined from the formula (6) above.

Fracture toughness

According to an SENB method, using the same test piece as the test piece used for measuring a flexural strength, evaluation was conducted by three-point bending at a span of 30 mm and at a crosshead speed of 0.5 mm/minute. A notch was made in the center of the pulling surface of the test piece so that the notch end had a curvature radius of 10 $\mu$m and a depth of 1.5 mm. A fracture toughness ($K_{IC}$) was determined from the formulae (11) and (12) above.

Dispersion treatment

Using the media in the Examples and Comparative Examples, using Dual Apex Mill (DAM-015, manufactured by Hiroshima Metal & Machinery Co., Ltd.), using ZTA (alumina-zirconia composite material) as a mill member vessel, using UHMV (made of polyethylene) as a rotor, employing 60% by volume of the mill volume as the amount of the medium filling the mill, and employing a rotor circumferential speed of 8 m/s, a powder to be treated was subjected to dispersion treatment under the conditions shown below. The dispersion treatment was conducted at a temperature such that the temperature of the slurry for first test was 40°C or lower, or higher than 40°C. In Example 8, the dispersion treatment was conducted both at a temperature such that the temperature of the slurry for first test was 40°C or lower and at a temperature such that the temperature of the slurry for first test was higher than 40°C.

Powder to be treated: Titanium oxide (primary particle diameter, as measured from an image of transmission electron microscope (TEM): 35 nm (value shown in the catalogue); specific surface area, as measured by a BET method: 37 m$^2$/g (value shown in the catalogue))

Concentration of the slurry for first test: 10% by mass
Flow rate of the slurry for first test: 160 mL/minute
Dispersion time: 3 hours
Pulverization or dispersion treatment of calcium carbonate ($CaCO_3$)

Using the media in Examples 2 and 7 and the media in Comparative Examples 6 and 8, using Dual Apex Mill (DAM-015, manufactured by Hiroshima Metal & Machinery Co., Ltd.), using ZTA (alumina-zirconia composite material) as a mill member vessel, using UHMV (made of polyethylene) as a rotor, employing 60% by volume of the mill volume as the amount of the medium filling the mill, and employing a rotor circumferential speed of 8 m/s, a powder to be treated was mixed into water to obtain a slurry for second test, and the slurry was subjected to dispersion treatment under the conditions shown below. The temperature for the dispersion treatment was shown in Table 5.

Powder to be treated: Calcium carbonate (average particle diameter, as measured by a laser diffraction particle size distribution measurement method: 2.1 $\mu$m (value shown in the catalogue); specific surface area, as measured by a BET method: 10 $m^2$/g (value shown in the catalogue))

Concentration of the slurry for second test: 10% by mass
Flow rate of the slurry for second test: 160 mL/minute
Dispersion time: 3 hours
Wear rate

The dispersion treatment was conducted and then, the $ZrO_2$ amount (ppm by mass/hour) contained in the slurry for first test or slurry for second test as a medium abrasive powder was measured from the powder to be treated (titanium oxide powder or calcium carbonate powder) after the dispersion treatment by inductively coupled plasma emission spectrometry (ICP) using an ICP emission spectrometer (ICPS-8100, manufactured by Shimadzu Corporation). A wear rate (ppm by mass/hour) obtained from the measured $ZrO_2$ amount in the powder to be treated (titanium oxide) after the dispersion treatment was shown in Table 4. Further, a wear rate (ppm by mass/hour) obtained from the measured $ZrO_2$ amount in the powder to be treated (calcium carbonate powder) after the dispersion treatment was shown in Table 5. The wear rate was determined from the following formula (13).

$$\text{Wear rate (ppm by mass/hour)} = \frac{\text{ZrO}_2 \text{ Amount (g) contained in powder to be treated after dispersion treatment} \times 10^6}{\text{Medium amount (g) before dispersion treatment} \times \text{Time (h)}} \quad (13)$$

Occurrence of fracture of the medium

With respect to the medium before the dispersion treatment and the medium after the dispersion treatment, the medium corresponding to 10% of the used medium was taken and, using a digital microscope (VHX-6000, manufactured by Keyence Corporation), an image of the medium at a magnification of 200 times was visually observed. The results of the observation of an occurrence of fracture of the medium after the dispersion treatment of the powder to be treated (titanium oxide powder) were shown Table 4, and the results of the observation of an occurrence of fracture of the medium after the dispersion treatment of the powder to be treated (calcium carbonate powder) were shown in Table 5.

[Table 1]

| | | Specific surface area | Average particle diameter | Aggregate powder average particle diameter | Calcination temperature | Sintering temperature |
|---|---|---|---|---|---|---|
| | | ($m^2$/g) | ($\mu$m) | ($\mu$m) | (°C) | (°C) |
| Example | 1 | 6.0 | 0.30 | 1.80 | 850 | 1400 |
| | 2 | 5.6 | 0.51 | 4.90 | 750 | 1350 |
| | 3 | 8.2 | 0.40 | 1.20 | 900 | 1380 |
| | 4 | 6.8 | 0.42 | 3.20 | 750 | 1250 |
| | 5 | 5.2 | 0.58 | 3.00 | 1200 | 1410 |
| | 6 | 9.5 | 0.32 | 1.20 | 620 | 1380 |
| | 7 | 7.2 | 0.59 | 4.20 | 800 | 1550 |
| | 8 | 8.2 | 0.60 | 2.80 | 700 | 1300 |

(continued)

| | | Specific surface area | Average particle diameter | Aggregate powder average particle diameter | Calcination temperature | Sintering temperature |
|---|---|---|---|---|---|---|
| | | (m²/g) | (µm) | (µm) | (°C) | (°C) |
| Comparative Example | 1 | 5.2 | 0.40 | 4.20 | 900 | 1200 |
| | 2 | 8.0 | 0.52 | 3.20 | 800 | 1350 |
| | 3 | 7.2 | 0.50 | 4.50 | 720 | 1450 |
| | 4 | 10.9 | 0.38 | 1.20 | 500 | 1450 |
| | 5 | 4.8 | 0.50 | 4.80 | 1300 | 1450 |
| | 6 | 8.9 | 0.28 | 0.90 | 800 | 1350 |
| | 7 | 8.0 | 0.50 | 5.20 | 900 | 1350 |
| | 8 | 9.0 | 0.32 | 1.20 | 900 | 1460 |
| | 9 | 5.5 | 0.58 | 3.20 | 1000 | 1620 |
| | 10 | 7.6 | 0.40 | 1.70 | 1100 | 1100 |
| | 11 | 5.8 | 0.32 | 4.90 | 1050 | 1450 |
| | 12 | 12.0 | 0.35 | 3.30 | 900 | 1400 |

[Table 2]

| | | Average of medium diameter | Coefficient of variation of medium diameter | Y₂O₃/ZrO₂ Molar ratio | Al₂O₃ (mass%) | SiO₂ (mass%) | Zirconia crystal phase (vol%) | | | Relative density | Average crystal grain diameter |
|---|---|---|---|---|---|---|---|---|---|---|---|
| | | | | | | | Cubic system C | Tetragonal system T | Monoclinic system M | | |
| | | ($\mu$m) | (%) | | | | | | | (%) | ($\mu$m) |
| Example | 1 | 112.3 | 5.8 | 2.7/97.3 | 10.3 | 0.004 | 0 | 100 | 0 | 99.0 | 0.31 |
| | 2 | 101.0 | 2.8 | 3.2/96.8 | 24.0 | 0.200 | 5 | 92 | 3 | 97.2 | 0.38 |
| | 3 | 98.8 | 1.8 | 2.5/97.5 | 2.1 | 0.300 | 0 | 98 | 2 | 99.2 | 0.30 |
| | 4 | 122.3 | 2.0 | 2.6/97.4 | 17.2 | 0.900 | 0 | 95 | 5 | 96.8 | 0.26 |
| | 5 | 108.5 | 1.2 | 3.1/96.9 | 4.2 | 0.010 | 2 | 98 | 0 | 95.2 | 0.45 |
| | 6 | 93.2 | 1.4 | 2.6/97.4 | 3.0 | 0.500 | 0 | 100 | 0 | 99.8 | 0.25 |
| | 7 | 110.5 | 1.8 | 2.9197.1 | 0.2 | 0.200 | 1 | 99 | 0 | 99.9 | 0.48 |
| | 8 | 98.0 | 2.1 | 2.5/97.5 | 1.2 | 0.000 | 0 | 100 | 0 | 98.0 | 0.30 |
| Comparative Example | 1 | 111.0 | 3.2 | 1.8/98.2 | 0.1 | 0.100 | 0 | 89 | 11 | 95.2 | 0.26 |
| | 2 | 98.0 | 3.0 | 2.6/97.4 | 0.0 | 0.010 | 0 | 99 | 1 | 93.8 | 0.28 |
| | 3 | 112.0 | 5.0 | 3.1/96.9 | 32.0 | 0.500 | 3 | 97 | 0 | 94.5 | 0.42 |
| | 4 | 89.5 | 5.8 | 2.8/97.2 | 1.3 | 1.000 | 3 | 97 | 0 | 99.1 | 0.39 |
| | 5 | 98.2 | 3.2 | 2.5/97.5 | 1.2 | 0.200 | 0 | 98 | 2 | 92.8 | 0.32 |
| | 6 | 112.0 | 6.2 | 3.2/96.8 | 5.2 | 0.040 | 3 | 97 | 0 | 97.5 | 0.33 |
| | 7 | 102.0 | 8.5 | 2.8/97.2 | 0.1 | 1.300 | 0 | 99 | 1 | 98.0 | 0.28 |
| | 8 | 112.0 | 1.8 | 3.4/96.6 | 6.1 | 0.030 | 6 | 94 | 0 | 98.8 | 0.48 |
| | 9 | 96.5 | 2.0 | 3.0/97.0 | 18.0 | 0.320 | 11 | 89 | 0 | 98.2 | 0.54 |
| | 10 | 98.6 | 2.6 | 3.1/96.9 | 10.3 | 0.800 | 2 | 98 | 0 | 89.0 | 0.23 |
| | 11 | 110.0 | 1.0 | 3.1/96.9 | 5.0 | 1.090 | 1 | 99 | 0 | 99.0 | 0.40 |
| | 12 | 99.8 | 3.2 | 2.5/97.5 | 0.4 | 0.100 | 0 | 99 | 1 | 99.0 | 0.28 |

[Table 3]

| | | Coefficient of variation of ultra-microindentation hardness (%) | Minimum value of crushing load: Pmin (N) Measured value (N) | Minimum value of crushing load: Specified value $600 \times D^{2.0}$ (N) | Average of crushing load Pave (N) (N) | Weibull coefficient of crushing load | Crushing load ratio A I | Crushing load ratio B | Flexural strength (MPa) | Weibull coefficient of flexural strength | Fracture toughness $(MPa \cdot m^{1/2})$ |
|---|---|---|---|---|---|---|---|---|---|---|---|
| Example | 1 | 0.8 | 8.0 | 7.6 | 9.5 | 10.9 | 0.84 | 0.979 | 1420 | 18.0 | 5.8 |
| | 2 | 3.2 | 7.0 | 6.1 | 8.1 | 12.2 | 0.87 | 0.988 | 1150 | 10.2 | 6.2 |
| | 3 | 2.2 | 6.2 | 5.9 | 7.7 | 14.0 | 0.81 | 0.974 | 1370 | 21.0 | 6.5 |
| | 4 | 2.0 | 10.2 | 9.0 | 11.0 | 15.2 | 0.93 | 0.982 | 1270 | 12.5 | 6.3 |
| | 5 | 1.8 | 8.0 | 7.1 | 8.3 | 13.6 | 0.96 | 0.988 | 1160 | 8.5 | 5.7 |
| | 6 | 1.2 | 5.5 | 5.2 | 6.0 | 21.0 | 0.92 | 0.967 | 1380 | 17.8 | 6.2 |
| | 7 | 4.8 | 8.1 | 7.3 | 9.2 | 12.0 | 0.88 | 0.978 | 1210 | 8.0 | 6.1 |
| | 8 | 1.9 | 6.0 | 3.8 | 6.8 | 10.5 | 0.88 | 0.735 | 1310 | 9.7 | 6.0 |
| Comparative Example | 1 | 3.1 | 7.8 | 7.4 | 8.9 | 10.3 | 0.88 | 0.899 | 770 | 12.0 | 4.2 |
| | 2 | 2.0 | 5.3 | 5.8 | 6.0 | 8.0 | 0.88 | 0.917 | 700 | 7.1 | 5.0 |
| | 3 | 6.0 | 7.0 | 7.5 | 9.0 | 11.0 | 0.78 | 0.889 | 690 | 11.5 | 4.8 |
| | 4 | 5.2 | 4.9 | 4.8 | 7.0 | 5.5 | 0.70 | 0.929 | 1230 | 7.5 | 6.3 |
| | 5 | 2.1 | 5.2 | 5.8 | 5.8 | 9.6 | 0.90 | 0.862 | 750 | 5.6 | 5.3 |
| | 6 | 2.5 | 7.0 | 7.5 | 10.2 | 8.9 | 0.69 | 0.961 | 1080 | 7.1 | 5.5 |
| | 7 | 3.8 | 3.0 | 6.2 | 5.3 | 7.9 | 0.57 | 0.755 | 1110 | 6.2 | 6.3 |
| | 8 | 2.5 | 5.3 | 7.5 | 8.0 | 11.2 | 0.66 | 0.888 | 980 | 8.1 | 5.2 |
| | 9 | 6.1 | 5.8 | 5.6 | 6.9 | 9.2 | 0.84 | 0.942 | 910 | 7.5 | 5.7 |
| | 10 | 3.1 | 2.6 | 5.8 | 8.1 | 5.4 | 0.32 | 0.951 | 720 | 11.1 | 4.9 |
| | 11 | 7.0 | 3.0 | 7.3 | 5.1 | 8.0 | 0.59 | 0.784 | 1030 | 8.0 | 4.8 |
| | 12 | 5.5 | 4.2 | 6.0 | 6.8 | 7.0 | 0.62 | 0.880 | 1180 | 5.8 | 6.1 |

[Table 4]

| | | Dispersion treatment (Titanium oxide) | | Occurrence of fracture (titanium oxide) after dispersion treatment |
|---|---|---|---|---|
| | | Temperature | Wear rate | |
| | | (°C) | (ppm by mass/hr) | |
| Example | 1 | 15 | 80 | No |
| | 2 | 15 | 51 | No |
| | 3 | 75 | 72 | No |
| | 4 | 40 | 33 | No |
| | 5 | 15 | 88 | No |
| | 6 | 80 | 67 | No |
| | 7 | 60 | 101 | No |
| | 8 | 15 | 91 | No |
| | | 40 | 510 | Yes |
| Comparative Example | 1 | 20 | 292 | Yes |
| | 2 | 10 | 410 | Yes |
| | 3 | 40 | 302 | Yes |
| | 4 | 80 | 320 | Yes |
| | 5 | 60 | 320 | Yes |
| | 6 | 10 | 220 | Yes |
| | 7 | 15 | 232 | Yes |
| | 8 | 20 | 398 | Yes |
| | 9 | 15 | 380 | Yes |
| | 10 | 35 | 320 | Yes |
| | 11(12) | 50 | 380 | Yes |
| | 12 | 15 | 330 | Yes |

[Table 5]

| | | Dispersion treatment (Calcium carbonate) | | Occurrence of fracture (calcium carbonate) after dispersion treatment |
|---|---|---|---|---|
| | | Temperature | Wear rate | |
| | | (°C) | (ppm by mass/hr) | |
| Example | 2 | 15 | 0.7 | No |
| | 7 | 15 | 1.3 | No |
| Comparative Example | 6 | 10 | 21.0 | No |
| | 8 | 20 | 3.1 | Yes |

The media in Examples 1 to 8 satisfied all the above-mentioned requirements (a) to (h), (j), (k), (n), and (o), and satisfied the treatments (p) to (w) for the method for producing the media. Further, the media in Examples 1 to 8 satisfied the above-mentioned requirements (x) and (y), and satisfied the fracture toughness, flexural strength, and Weibull coefficient of flexural strength, which are required by, for example, the material Class III for silicon nitride ($Si_3N_4$) bearing ball, which is specified by F2094 of ASTM International, or the Grade 3 for silicon nitride ($Si_3N_4$) material for roller bearing, which is specified by JIS R1669. With respect to the media in Examples 1 to 5 and 8, when used in the pulverization or dispersion treatment for the slurry for first test containing a powder to be treated and using a medium (water) at a temperature of 40°C or lower, the wear rate was less than 100 ppm by mass/hour, which indicates that the media had excellent wear resistance. Further, with respect to the media in Examples 6 and 7, when used in the pulverization or dispersion treatment for the slurry for first test containing a powder to be treated (titanium oxide powder) having a small primary particle diameter and using a medium (water) at a temperature of higher than 40°C, the wear rate was 101 ppm by mass/hour or less, which indicates that the media had excellent wear resistance even when used in warm water. With respect to the media in Examples 1 to 7, neither fracture nor chipping occurred after the pulverization or dispersion treatment, which indicates that the media had excellent durability.

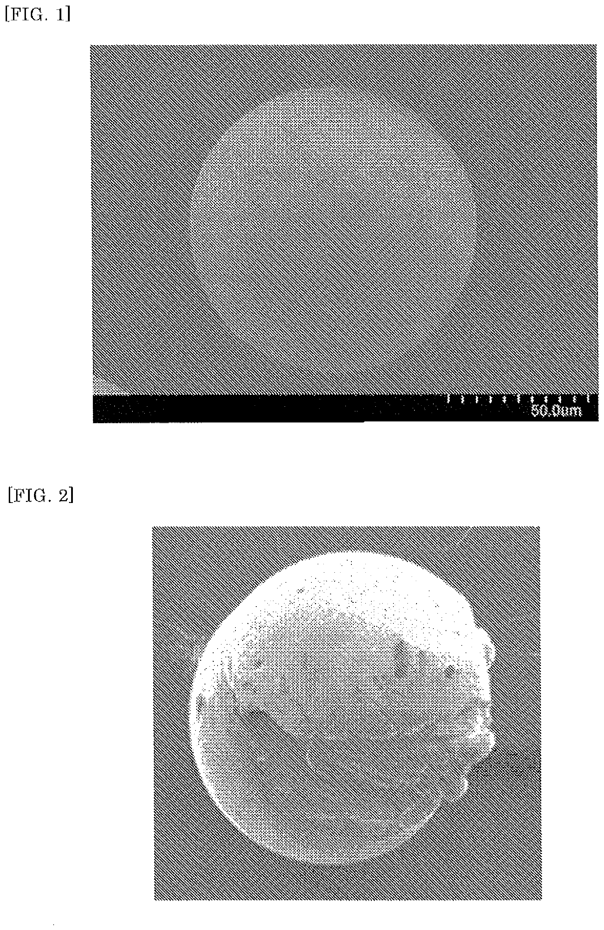

With respect to the media in Examples 2 and 7, when used in the pulverization or dispersion treatment for the slurry for second test containing a powder to be treated (calcium carbonate) having an average particle diameter of 1 to 10 $\mu$m, the wear rate was 1.5 ppm by mass/hour or less, which indicates that the media had excellent wear resistance. From the above results, it has been found that the medium which satisfies the above-mentioned requirements (a) to (h), preferably further the requirements (j), (k), (n), and (o), had such excellent wear resistance in the pulverization or dispersion treatment for calcium carbonate, which is used as a powder for pharmaceutical use, that no fracture or chipping occurred in the medium, and was able to achieve pulverization or dispersion treatment of the powder to be treated while maintaining the high purity of the powder to be treated. Fig. 1 is a photograph of the medium in Example 1 taken by means of a scanning electron microscope (SEM). The medium in Example 1 has a shape close to a sphere, and has excellent wear resistance.

In the medium in Comparative Example 1, the $Y_2O_3/ZrO_2$ molar ratio is less than 2.5/97.5, and the amount of the contained tetragonal crystal system zirconia is less than 90% by volume, and thus the requirements (a) and (c) are not satisfied. Further, with respect to the medium in Comparative Example 1, the fracture toughness is 4.2 MPa $\cdot$ m$^{1/2}$, and the flexural strength is 770 MPa, and thus part of the requirements (x) and (y) are not satisfied. The medium in Comparative Example 1 does not satisfy the treatment (p) for the method for producing the medium. In the medium in Comparative Example 1, the amount of the contained monoclinic crystal system zirconia is as large as 11% by volume, and the mechanical properties are low, and the wear resistance is reduced. In the medium in Comparative Example 1, the crushing load ratio B does not satisfy the requirement (o).

In the media in Comparative Examples 2 and 3, the amount of the contained $Al_2O_3$ is not in the range of from 0.1 to 30.0% by mass, and thus the requirement (b) is not satisfied. In the medium in Comparative Example 2, $Al_2O_3$ is not contained, and an improvement of the sintering properties is not achieved, and the relative density is less than 95%, and thus the requirement (d) is not satisfied. The mechanical properties are not improved, and thus the minimum value Pmin of crushing load does not satisfy the relationship: Pmin (N) > 600 $\times$ D$^{2.0}$ (the requirement (f)). In the medium in Comparative Example 2, the Weibull coefficient of crushing load is less than 10, and thus the requirement (g) is not satisfied. With respect to the medium in Comparative Example 2, the flexural strength is 700 MPa, and thus part of the requirement (y) is not satisfied. In the medium in Comparative Example 2, the medium having a low strength is also present, and therefore a stress is concentrated on the medium having a low strength, and fracture or chipping is likely to occur, so that the wear resistance and durability become low. The medium in Comparative Example 3 has a relative density of less than 95%, and does not satisfy the requirement (d), and a large amount of internal defects remained. In the medium in Comparative Example 3, the mechanical properties are not improved, and thus the minimum value Pmin of crushing load does not satisfy the relationship: Pmin (N) > 600 $\times$ D$^{2.0}$ (the requirement (f)), so that the wear resistance and durability become low. With respect to the medium in Comparative Example 3, the coefficient of variation of microindentation hardness as measured using an ultra-microindentation hardness tester is as large as more than 5%. With respect to the medium in Comparative Example 3, the fracture toughness is 4.8 MPa $\cdot$ m$^{1/2}$, and the flexural strength is 690 MPa, and thus part of the requirements (x) and (y) are not satisfied. With respect to the medium in Comparative Example 3, the wear resistance is further reduced when used in warm water at 40°C in the pulverization or dispersion treatment.

The media in Comparative Examples 4 and 5 do not satisfy the treatment (r) conducted so that the specific surface area of the mixed powder is in the range of from 5 to 10 m$^2$/g. Further, with respect to the media in Comparative Examples 4 and 5, the calcination temperature for obtaining a synthetic powder is not in the range of from 600°C to 1,200°C, and thus the treatment (p) is not satisfied. With respect to the medium in Comparative Example 4, the mixed powder has such a large specific surface area that the powder is finely divided, and hence the sintering properties are non-uniform, and the Weibull coefficient of crushing load is less than 10, and thus the requirement (g) is not satisfied. In the medium having a low strength, a stress is concentrated on the portion having a low strength in the medium, so that the wear resistance and durability become low.

With respect to the medium in Comparative Example 4, the coefficient of variation of hardness as measured using an ultra-microindentation hardness tester is as large as more than 5%, and the crushing load ratio A is less than 0.8, and thus the requirements (j) and (n) are not satisfied.

With respect to the medium in Comparative Example 5, the specific surface area is small and the sintering properties are such low that a defect remains in the resultant sintered material, and the relative density is less than 95%, and thus the requirement (d) is not satisfied. With respect to the medium in Comparative Example 5, the minimum value Pmin of crushing load does not satisfy the relationship: Pmin (N) > 600 × $D^{2.0}$ (the requirement (f)). With respect to the medium in Comparative Example 5, the flexural strength is 750 MPa, and the Weibull coefficient of flexural strength is 5.6, and thus the requirement (y) is not satisfied.

With respect to the media in Comparative Examples 4 and 5, the wear resistance is further reduced when used in warm water at higher than 40°C in the pulverization or dispersion treatment.

The media in Comparative Examples 6 and 7 do not satisfy the treatment (t) conducted so that the powder in an aggregate form obtained by drying the mixed powder slurry has an aggregate powder average particle diameter in the range of from 1 to 5 μm. With respect to the medium in Comparative Example 6, the average particle diameter of the mixed powder is less than 0.3 μm, and thus the treatment (s) is not satisfied. In the medium in Comparative Example 7, the amount of the contained $SiO_2$ is more than 1.0% by mass, and thus the requirement (k) or (w) is not satisfied. In the media in Comparative Examples 6 and 7, the aggregate powder average particle diameter is not in the range of from 1 μm to 5 μm, and therefore the moldability is low, and the coefficient of variation of medium diameter is 6% or more, and thus the requirement (h) is not satisfied, and the particle size distribution of the medium diameter is not uniform, and a stress is concentrated on the medium having a low strength to cause fracture or chipping, so that the wear resistance and durability become low.

With respect to the medium in Comparative Example 6, the minimum value Pmin of crushing load does not satisfy the relationship: Pmin (N) > 600 × $D^{2.0}$ (the requirement (f)), and the Weibull coefficient of crushing load and crushing load ratio A do not satisfy the requirements (g) and (n). With respect to the medium in Comparative Example 6, the flexural strength is 1,080 MPa, and part of the requirement (y) is not satisfied.

In the medium in Comparative Example 7, the amount of the contained $SiO_2$ is more than 1.0% by mass, and the second phase composed of a $SiO_2$ phase is formed in the crystal grain boundary of $ZrO_2$, and the minimum value Pmin of crushing load does not satisfy the relationship: Pmin (N) > 600 × $D^{2.0}$ (the requirement (f)), and the crushing load ratio A and crushing load ratio B do not satisfy the requirements (n) and (o). With respect to the medium in Comparative Example 7, the Weibull coefficient of flexural strength is 6.2, and thus part of the requirement (y) is not satisfied.

With respect to the medium in Comparative Example 7, the inside of the molded article is ununiform, and therefore sintering shrinkage has proceeded ununiformly, and it has been found that the sintered material of an irregular shape is present as shown in Fig. 2. Fig. 2 is a photomicrograph of the medium in Comparative Example 7 taken by means of a scanning electron microscope (SEM). When the medium containing such a sintered material of an irregular shape is subjected to dispersion treatment, an ununiform load is applied to the medium, and fracture or chipping is likely to occur, so that the wear resistance and durability become low. An occurrence of fracture or chipping was found in the medium after being used.

In the medium in Comparative Example 8, the $Y_2O_3/ZrO_2$ molar ratio is more than 3.2/96.8, and thus the requirement (a) is not satisfied. In the medium in Comparative Example 8, the amount of the contained cubic crystal system zirconia (C) is as large as 6% by volume, which causes the toughness to become low, and fracture or chipping is likely to occur in the medium having a low strength, so that the wear resistance and durability become low. With respect to the medium in Comparative Example 8, the minimum value Pmin of crushing load does not satisfy the relationship: Pmin (N) > 600 × $D^{2.0}$ (the requirement (f)), and the crushing load ratio A and crushing load ratio B do not satisfy the requirements (n) and (o). With respect to the medium in Comparative Example 8, the flexural strength is 980 MPa, and part of the requirement (y) is not satisfied.

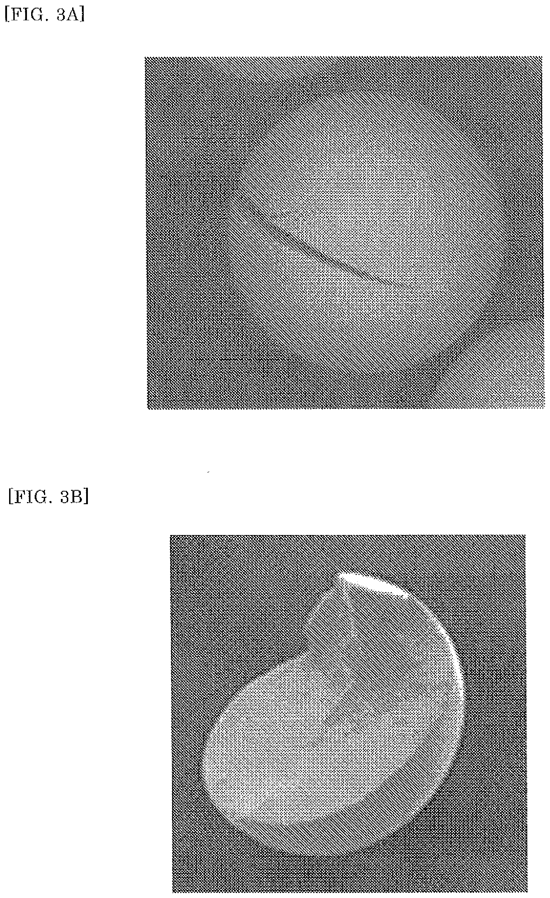

In the medium in Comparative Example 8, a portion having a low strength is present, and it has been found that, as shown in Fig. 3A, the sintered material having crazing is present. Fig. 3A is a photograph taken by means of a scanning electron microscope (SEM) of the medium in Comparative Example 8 before used in the pulverization and/or dispersion treatment. When the medium containing such a sintered material having crazing is subjected to dispersion treatment, an ununiform load is applied to the medium, and, with respect to the medium which has been used in the dispersion treatment, as shown in Fig. 3B, a fragment formed due to fracture of the sintered material was found. Fig. 3B is a photomicrograph taken by means of a scanning electron microscope (SEM) of the medium in Comparative Example 8 after used in the pulverization and/or dispersion treatment.

With respect to the media in Comparative Examples 9 and 10, the sintering temperature is not in the range of from 1,250°C to 1,600°C, and thus the treatment (v) is not satisfied.

With respect to the medium in Comparative Example 9, the sintering temperature is higher than 1,600°C, and the crystal grain diameter is considerably increased, and the average crystal grain diameter is more than 0.5 μm, and thus the requirement (e) is not satisfied. In the medium in Comparative Example 9, the amount of the contained tetragonal crystal system zirconia is less than 90% by volume, and thus the requirement (c) is not satisfied. In the medium in Comparative Example 9, the amount of the contained cubic crystal system zirconia (C) is as large as 11% by volume, which causes the toughness to become low, and fracture or chipping is likely to occur in the medium having a low strength, so that the wear resistance and durability become low. With respect to the medium in Comparative Example 9, the coefficient of variation of ultra-microindentation hardness is as large as more than 5%, and the crushing load ratio B is less than 0.95, and thus the requirements (j) and (o) are not satisfied. With respect to the medium in Comparative Example 9, the flexural strength is 910 MPa, and part of the requirement (y) is not satisfied.

With respect to the medium in Comparative Example 10, the sintering temperature is lower than 1,250°C, and the treatment (v) is not satisfied. With respect to the medium in Comparative Example 10, sintering is unsatisfactory, and a defect remains to lower the strength, so that the wear resistance and durability become low. The medium in Comparative Example 10 has a relative density of 90% or less and an average crystal grain diameter of less than 0.25 $\mu$m, and the Weibull coefficient of crushing load is less than 10, and thus the requirements (d), (e), and (g) are not satisfied. With respect to the medium in Comparative Example 10, the minimum value Pmin of crushing load does not satisfy the relationship: Pmin (N) > 600 × D$^{2.0}$ (the requirement (f)). The medium in Comparative Example 10 has a fracture toughness of 4.9 MPa • m$^{1/2}$ and a flexural strength of 720 MPa, and does not satisfy part of the requirements (x) and (y).

With respect to the medium in Comparative Example 11, the minimum value Pmin of crushing load does not satisfy the relationship: Pmin (N) > 600 × D$^{2.0}$ (the requirement (f)). The crushing load ratio A and crushing load ratio B do not satisfy the requirements (n) and (o). In the medium in Comparative Example 11, the amount of the contained $SiO_2$ is more than 1.0% by mass, and thus the requirement (k) is not satisfied. The medium in Comparative Example 11 has a fracture toughness of 4.8 MPa • m$^{1/2}$ and a flexural strength of 1,030 MPa, and does not satisfy part of the requirements (x) and (y). In the medium in Comparative Example 11, the amount of the contained $SiO_2$ is more than 1.0% by mass, and therefore the second phase composed of a $SiO_2$ phase is formed in the crystal grain boundary of $ZrO_2$, and fracture or chipping occurs, so that the wear resistance and durability become low. With respect to the medium in Comparative Example 11, the wear resistance is further reduced when used in warm water at higher than 40°C in the pulverization or dispersion treatment.

With respect to the medium in Comparative Example 12, the specific surface area of the mixed powder is more than 10 m$^2$/g, and thus the treatment (r) is not satisfied. With respect to the medium in Comparative Example 12, the sintering properties are such high that the structure is not uniformly sintered, and the coefficient of variation of ultra-microindentation hardness is more than 5%, and thus the requirement (j) is not satisfied. Further, in the medium in Comparative Example 12, the crushing load ratio A does not satisfy the requirement (n). With respect to the medium in Comparative Example 12, the Weibull coefficient of crushing load does not satisfy the requirement (g). With respect to the medium in Comparative Example 12, the Weibull coefficient of flexural strength is 5.8, and thus part of the requirement (y) is not satisfied. With respect to the medium in Comparative Example 12, the strength of the medium is not uniform, and therefore a stress is concentrated on the medium having a low strength, so that the wear resistance becomes low.

Industrial Applicability

The zirconia medium of the present disclosure has such excellent wear resistance and durability that an occurrence of fracture or chipping can be suppressed even when the medium is used in a bead mill conducting high-speed rotation in which a high load is applied to the medium, making it possible to maintain high purity of the powder to be treated. The zirconia medium of the present disclosure has reduced variation of the sintering properties and has high mechanical properties, and therefore can be advantageously used not only as a powder for use in a material for electronic parts, but also as a medium for pulverization or dispersion treatment of a powder for pharmaceutical use, which is required to maintain high purity. Further, the zirconia medium has high mechanical properties and has suppressed variation of the shape of the medium, and satisfies the fracture toughness, flexural strength, and Weibull coefficient of flexural strength, which are required by, for example, the material Class III for silicon nitride ($Si_3N_4$) bearing ball, which is specified by F2094 of ASTM International, or the Grade 3 for silicon nitride ($Si_3N_4$) material for roller bearing, which is specified by JIS R1669, and therefore can be advantageously used as a bearing ball. A bearing having the zirconia bearing ball can be used in a wind turbine generator, aircraft, an automobile, a bicycle, an electric train, a refrigerator, an air conditioner, a cleaner, a copier, a washing machine, an electric massage chair, a camera, an electric screwdriver, a personal computer, an automatic ticket gate, moving walkway, an elevator, a conveyer, and medical apparatuses, such as a computed tomography apparatus (CT), a magnetic resonance imaging apparatus (MRI), and a dental handpiece.

Reference Signs List

1: Bearing
2: Inner ring
3: Outer ring
4: Bearing ball

**Claims**

1.  A zirconia medium fulfilling following requirements (a) to (h):

    (a) comprising a $ZrO_2$-$Y_2O_3$ zirconia sintered material, wherein the $Y_2O_3$/$ZrO_2$ molar ratio is in the range of from 2.5/97.5 to 3.2/96.8;
    (b) the amount of the contained $Al_2O_3$ being in the range of from 0.1% by mass to 30.0% by mass;
    (c) containing tetragonal crystal system zirconia in an amount of 90% by volume or more;
    (d) having a relative density of 95% or more;
    (e) having an average crystal grain diameter in the range of from 0.25 $\mu$m to 0.50 $\mu$m;
    (f) the minimum value Pmin of crushing load measured at a crosshead speed of 0.5 mm/minute satisfying the relationship: Pmin (N) > 600 $\times$ $D^{2.0}$ (wherein D is an average of medium diameter);
    (g) the Weibull coefficient of crushing load being 10 or more; and
    (h) the coefficient of variation of medium diameter being less than 6%, wherein the coefficient of variation of medium diameter is introduced from an average and a standard deviation of medium diameter measured with respect to 200 media, wherein the medium diameter is the largest diameter of the medium seen in a SEM image obtained using a scanning electron microscope.

2.  The zirconia medium according to claim 1, wherein fulfilling a requirement (j) the coefficient of variation of microindentation hardness is 5% or less, wherein the coefficient of variation of microindentation hardness is introduced from an average and a standard deviation of microindentation hardness, as measured by a method in accordance with ISO 14577, in which one medium is embedded into a curable embedding resin, and the curable embedding resin is cured, and ground to 40% to 50% of the diameter of the medium and the resultant cross-section is subjected to mirror polishing and then, using an ultra-microindentation hardness tester, a hardness of the polished cross-section of the medium is measured with respect to 10 sites at regular intervals, and the microindentation hardness is measured with respect to 10 media.

3.  The zirconia medium according to claim 1 or 2, wherein fulfilling a requirement (k) the amount of the contained $SiO_2$ is in the range of from 0.2% by mass to 1.0% by mass.

4.  The zirconia medium according to any one of claims 1 to 3, wherein fulfilling a requirement (n) the crushing load ratio A (Pmin (N)/Pave (N)) of the minimum value Pmin (N) of crushing load to the average Pave (N) of crushing load measured at a crosshead speed of 0.5 mm/minute is 0.8 or more.

5.  The zirconia medium according to any one of claims 1 to 4, wherein fulfilling a requirement (o) the crushing load ratio B (Pave 0.1 (N)/Pave (N)) of the average Pave 0.1 (N) of crushing load measured at a crosshead speed of 0.1 mm/minute to the average Pave of crushing load measured at a crosshead speed of 0.5 mm/minute is 0.95 or more.

6.  A zirconia bearing ball fulfilling following requirements:

    (a) comprising a $ZrO_2$-$Y_2O_3$ zirconia sintered material, wherein the $Y_2O_3$/$ZrO_2$ molar ratio is in the range of from 2.5/97.5 to 3.2/96.8;
    (b) the amount of the contained $Al_2O_3$ being in the range of from 0.1 % by mass to 30.0% by mass;
    (c) containing tetragonal crystal system zirconia in an amount of 90% by volume or more;
    (d) having a relative density of 95% or more;
    (e) having an average crystal grain diameter in the range of from 0.25 $\mu$m to 0.50 $\mu$m;
    (f) the minimum value Pmin of crushing load measured at a crosshead speed of 0.5 mm/minute satisfying the relationship: Pmin (N) > 600 $\times$ $D^{2.0}$ (wherein D is an average of medium diameter);
    (g) the Weibull coefficient of crushing load being 10 or more;
    (h) the coefficient of variation of medium diameter being less than 6%, wherein the coefficient of variation of medium diameter is introduced from an average and a standard deviation of medium diameter measured with respect to 200 media, wherein the medium diameter is the largest diameter of the medium seen in a SEM image obtained using a scanning electron microscope;
    (x) having a fracture toughness of more than 5.0 MPa $\cdot$ $m^{1/2}$; and
    (y) having a flexural strength of more than 1,100 MPa, wherein the Weibull coefficient of flexural strength is more than 7.

7.  A method for producing a zirconia medium comprising:

(p) mixing a zirconium raw material and a yttrium raw material so that the $Y_2O_3/ZrO_2$ molar ratio is in the range of from 2.5/97.5 to 3.2/96.8, and hydrolyzing the resultant mixture, and calcining the obtained hydrate of zirconium and yttrium at a temperature in the range of from 600°C to 1,200°C to obtain a synthetic powder,

(q) mixing the synthetic powder and an $Al_2O_3$ powder so that the amount of the contained $Al_2O_3$ is in the range of from 0.1% by mass to 30.0% by mass, based on the mass of the resultant mixed powder, obtaining a mixed powder,

(r) a powder, which is obtained by drying a mixed powder slurry obtained by wet pulverizing and/or dispersing the mixed powder, has a specific surface area in the range of from 5 $m^2/g$ to 10 $m^2/g$, as measured by a BET method,

(s) and that the mixed powder slurry has an average particle diameter for 50% cumulative frequency in the volume-based particle size distribution in the range of from 0.3 $\mu$m to 0.6 $\mu$m, as measured by a laser diffraction method in accordance with JIS Z8825,

(t) subjecting the mixed powder slurry to drying and particle size selection so that, with respect to a slurry for measurement of aggregate powder average particle diameter obtained by mixing 1 part by mass of a powder, which is obtained by drying the mixed powder slurry, and 100 parts by mass of a solvent for molding, the aggregate powder average particle diameter for 50% cumulative frequency in the volume-based particle size distribution of the powder in an aggregate form in the slurry, as measured by a laser diffraction method in accordance with JIS Z8825, becomes in the range of from 1 $\mu$m to 5 $\mu$m, preparing the resultant powder for molding,

(u) subjecting the powder for molding to granulation molding to obtain a molded article, and

(v) sintering the molded article at a temperature in the range of from 1,250°C to 1,600°C to obtain a $ZrO_2$-$Y_2O_3$ zirconia sintered material,

wherein the zirconia medium comprises the sintered material.

8. The method for producing a zirconia medium according to claim 7, wherein the mixed powder (w) contains a $SiO_2$ raw material so that the amount of the contained $SiO_2$ is in the range of from 0.2% by mass to 1.0% by mass, based on the mass of the resultant mixture.

9. A method for producing a zirconia bearing ball comprising:

(p) mixing a zirconium raw material and a yttrium raw material so that the $Y_2O_3/ZrO_2$ molar ratio is in the range of from 2.5/97.5 to 3.2/96.8, and hydrolyzing the resultant mixture, and calcining the obtained hydrate of zirconium and yttrium at a temperature in the range of from 600°C to 1,200°C to obtain a synthetic powder,

(q) mixing the synthetic powder and an $Al_2O_3$ powder so that the amount of the contained $Al_2O_3$ is in the range of from 0.1% by mass to 30.0% by mass, based on the mass of the resultant mixed powder, obtaining a mixed powder,

(r) a powder, which is obtained by drying a mixed powder slurry obtained by wet pulverizing and/or dispersing the mixed powder, has a specific surface area in the range of from 5 $m^2/g$ to 10 $m^2/g$, as measured by a BET method,

(s) and that the mixed powder slurry has an average particle diameter for 50% cumulative frequency in the volume-based particle size distribution in the range of from 0.3 $\mu$m to 0.6 $\mu$m, as measured by a laser diffraction method in accordance with JIS Z8825,

(t) subjecting the mixed powder slurry to drying and particle size selection so that, with respect to a slurry for measurement of aggregate powder average particle diameter obtained by mixing 1 part by mass of a powder, which is obtained by drying the mixed powder slurry, and 100 parts by mass of a solvent for molding, the aggregate powder average particle diameter for 50% cumulative frequency in the volume-based particle size distribution of the powder in an aggregate form in the slurry, as measured by a laser diffraction method in accordance with JIS Z8825, becomes in the range of from 1 to 5 $\mu$m, preparing the resultant powder for molding,

(u) subjecting the powder for molding to granulation molding to obtain a molded article, and

(v) sintering the molded article at a temperature in the range of from 1,250°C to 1,600°C to obtain a $ZrO_2$-$Y_2O_3$ zirconia sintered material,

wherein the zirconia bearing ball comprises the sintered material.

10. The method for producing a zirconia bearing ball according to claim 9, wherein the mixed powder (w) contains a $SiO_2$ raw material so that the amount of the contained $SiO_2$ is in the range of from 0.2% by mass to 1.0% by mass, based on the mass of the resultant mixture.

[FIG. 1]

[FIG. 2]

[FIG. 3A]

[FIG. 3B]

[FIG. 4]

## INTERNATIONAL SEARCH REPORT

| International application No. |
|---|
| **PCT/JP2023/013825** |

**A.    CLASSIFICATION OF SUBJECT MATTER**

*B02C 17/20*(2006.01)i; *C04B 35/488*(2006.01)i
FI:    B02C17/20; C04B35/488 500

According to International Patent Classification (IPC) or to both national classification and IPC

**B.    FIELDS SEARCHED**

Minimum documentation searched (classification system followed by classification symbols)

B02C17/20; C04B35/488

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
|---|---|---|
| A | JP 2014-205586 A (NIKKATO CORP) 30 October 2014 (2014-10-30) | 1-10 |
| A | JP 2000-239063 A (NIKKATO CORP) 05 September 2000 (2000-09-05) | 1-10 |
| A | JP 6-183833 A (TOSOH CORP) 05 July 1994 (1994-07-05) | 1-10 |
| A | JP 2017-56429 A (NIKKATO CORP) 23 March 2017 (2017-03-23) | 1-10 |
| A | JP 2002-1144 A (MURATA MFG CO LTD) 08 January 2002 (2002-01-08) | 1-10 |
| A | JP 9-188562 A (SHINAGAWA REFRACT CO LTD) 22 July 1997 (1997-07-22) | 1-10 |
| A | JP 6-15191 A (NIKKATO CORP) 25 January 1994 (1994-01-25) | 1-10 |
| A | JP 2003-314556 A (NIKKATO CORP) 06 November 2003 (2003-11-06) | 1-10 |
| A | JP 2013-148127 A (NSK LTD) 01 August 2013 (2013-08-01) | 1-10 |
| A | JP 2001-163666 A (NIPPON SHOKUBAI CO LTD) 19 June 2001 (2001-06-19) | 1-10 |

☑ Further documents are listed in the continuation of Box C.    ☑ See patent family annex.

| | |
|---|---|
| *    Special categories of cited documents:<br>"A"   document defining the general state of the art which is not considered to be of particular relevance<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search | Date of mailing of the international search report |
|---|---|
| **24 May 2023** | **06 June 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**

| International application No. |
|---|
| **PCT/JP2023/013825** |

**C.    DOCUMENTS CONSIDERED TO BE RELEVANT**

| Category* | Citation of document, with indication, where appropriate, of the relevant passages | Relevant to claim No. |
|---|---|---|
| A | JP 10-85619 A (TORAY IND INC) 07 April 1998 (1998-04-07) | 1-10 |
| A | JP 2014-92259 A (NSK LTD) 19 May 2014 (2014-05-19) | 1-10 |
| A | US 2020/0223755 A1 (SAINT-GOBAIN CENTRE DE RECHERCHES ET D'ETUDES EUROPEEN) 16 July 2020 (2020-07-16) | 1-10 |

Form PCT/ISA/210 (second sheet) (January 2015)

INTERNATIONAL SEARCH REPORT
Information on patent family members

International application No.

**PCT/JP2023/013825**

| Patent document cited in search report | | | Publication date (day/month/year) | Patent family member(s) | | | Publication date (day/month/year) |
|---|---|---|---|---|---|---|---|
| JP | 2014-205586 | A | 30 October 2014 | (Family: none) | | | |
| JP | 2000-239063 | A | 05 September 2000 | (Family: none) | | | |
| JP | 6-183833 | A | 05 July 1994 | (Family: none) | | | |
| JP | 2017-56429 | A | 23 March 2017 | (Family: none) | | | |
| JP | 2002-1144 | A | 08 January 2002 | (Family: none) | | | |
| JP | 9-188562 | A | 22 July 1997 | (Family: none) | | | |
| JP | 6-15191 | A | 25 January 1994 | EP | 567136 | A1 | |
| JP | 2003-314556 | A | 06 November 2003 | US | 2004/0162214 | A1 | |
| | | | | WO | 2003/033433 | A1 | |
| | | | | EP | 1437333 | A1 | |
| JP | 2013-148127 | A | 01 August 2013 | (Family: none) | | | |
| JP | 2001-163666 | A | 19 June 2001 | US | 6902790 | B1 | |
| | | | | EP | 1063212 | A1 | |
| JP | 10-85619 | A | 07 April 1998 | US | 5957398 | A | |
| | | | | EP | 811586 | A2 | |
| | | | | KR | 10-0485278 | B1 | |
| JP | 2014-92259 | A | 19 May 2014 | (Family: none) | | | |
| US | 2020/0223755 | A1 | 16 July 2020 | WO | 2019/016270 | A1 | |
| | | | | FR | 3069243 | A | |
| | | | | KR | 10-2020-0031631 | A | |
| | | | | CN | 111094213 | A | |

Form PCT/ISA/210 (patent family annex) (January 2015)

**EP 4 516 404 A1**

**REFERENCES CITED IN THE DESCRIPTION**

**Patent documents cited in the description**

- JP H07155577 A
- JP 2014205586 A
- JP 2004315246 A
- JP 2004307339 A